(19) Europäisches Patentamt
European Patent Office
Office européen des brevets

(11) **EP 4 568 154 A1**

(12) **EUROPEAN PATENT APPLICATION**
published in accordance with Art. 153(4) EPC

(43) Date of publication:
**11.06.2025 Bulletin 2025/24**

(21) Application number: **23849344.9**

(22) Date of filing: **31.07.2023**

(51) International Patent Classification (IPC):
**H04L 5/00** (2006.01)

(52) Cooperative Patent Classification (CPC):
**H04L 5/00; H04W 72/0453; H04W 72/0457**

(86) International application number:
**PCT/CN2023/110195**

(87) International publication number:
**WO 2024/027637 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.08.2022 CN 202210922186**

(71) Applicant: **Datang Mobile Communications
Equipment Co., Ltd.
Beijing 100085 (CN)**

(72) Inventors:
• **SI, Qianqian
Beijing 100085 (CN)**
• **ZHAO, Yue
Beijing 100085 (CN)**
• **XING, Yanping
Beijing 100085 (CN)**
• **GAO, Xuejuan
Beijing 100085 (CN)**

(74) Representative: **Studio Torta S.p.A.
Via Viotti, 9
10121 Torino (IT)**

(54) **RESOURCE DETERMINATION METHOD AND APPARATUS, AND TERMINAL AND NETWORK-SIDE DEVICE**

(57)    The present disclosure provides a resource determination method, device, terminal, and network-side equipment to address the problem in the prior art where the frequency domain resource allocation information in the RAR UL grant or TC-RNTI scrambled DCI cannot indicate the PUSCH transmission within the uplink sub-band, thereby failing to achieve such PUSCH transmission. The method includes: determining the frequency domain resource location of the Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP). Here, the PUSCH may either be scheduled by a Random Access Response (RAR) or by Downlink Control Information (DCI) scrambled by a Temporary Cell-Radio Network Temporary Identifier (TC-RNTI).

Determining the frequency domain resource location of a PUSCH based on at least one of the starting RB location of the uplink sub-band, the starting RB location of the activated uplink Bandwidth Part (active UL BWP), and the starting RB location of the initial uplink Bandwidth Part (initial UL BWP), wherein the PUSCH is a PUSCH scheduled by RAR or a PUSCH scheduled by DCI scrambled by a TC-RNTI

—401

FIG. 4

EP 4 568 154 A1

**Description**

**CROSS-REFERENCE TO RELATED APPLICATIONS**

This application claims a priority to Chinese Patent Application No. 202210922186.0 filed in China on August 2, 2022, the entire contents of which are incorporated herein by reference.

**TECHNICAL FIELD**

The present disclosure relates to the field of communication technology, and more particularly to a resource determination method, device, terminal, and network-side equipment.

**BACKGROUND**

In the Release 18 (R18) version of the $5^{th}$ Generation Mobile Communication Technology (5G) New Radio (NR), non-overlapping subband full duplex will be supported.

However, in the scenario of non-overlapping subband full duplex, there is an issue where the frequency domain resource allocation information in the RAR UL grant or the DCI scrambled with TC-RNTI cannot indicate the PUSCH transmitted in the uplink sub-band, thereby failing to implement transmission of the PUSCH in the uplink sub-band.

**SUMMARY**

The present disclosure is directed to provides a resource determination method, device, terminal, and network-side equipment, so as to solve the problem in the prior art that the frequency domain resource allocation information in the RAR UL grant or DCIs scrambled by TC-RNTI cannot indicate the PUSCH transmitted in the uplink sub-band, thereby failing to implement transmission of the PUSCH in the uplink sub-band.

To achieve the above purpose, an embodiment of the present disclosure provides a resource determination method applied to a terminal, including:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP); wherein the PUSCH is a PUSCH scheduled by Random Access Response (RAR) or a PUSCH scheduled by Downlink Control Information (DCI) scrambled by Temporary Cell Radio Network Temporary Identifier (TC-RNTI).

Optionally, determining the frequency domain resource location of the PUSCH according to at least one of the starting RB location of the uplink sub-band, the starting RB location of the active UL BWP, and the starting RB location of the initial UL BWP includes:

determining Virtual Resource Blocks (VRB) based on frequency domain resource allocation indication, wherein the frequency domain resource allocation indication is used to indicate the starting RB number of the VRB and the number of consecutive allocated RBs;
when mapping from VRB to Physical Resource Blocks (PRB), determining the frequency domain resource location of the PUSCH through a target mode based on at least one of the starting RB location of the uplink sub-band, the starting RB location of the active UL BWP, and the starting RB location of the initial UL BWP.

Optionally, the target mode includes one of the following modes:

When the starting RB number of the uplink sub-band is referenced to the carrier's starting location and the VRB number is n, the corresponding PRB number is n + starting RB number of the uplink sub-band - starting RB number of the active UL BWP, where the carrier is the carrier on which the uplink sub-band, the initial UL BWP, and the active UL BWP are located; or,
When the starting RB number of the uplink sub-band is referenced to the starting location of the initial UL BWP and the VRB number is n, the corresponding PRB number is n + starting RB number of the uplink sub-band + starting RB number of the initial UL BWP - starting RB number of the active UL BWP; or,
When the starting RB number of the uplink sub-band is referenced to the starting location of the active UL BWP and the VRB number is n, the corresponding PRB number is n + starting RB number of the uplink sub-band.

Optionally, the method further includes:

obtaining frequency domain resource allocation indication based on the bandwidth of the uplink sub-band; or,
obtaining frequency domain resource allocation indication based on the initial UL BWP.

Optionally, obtaining frequency domain resource allocation indication based on the bandwidth of the uplink sub-band includes:

when the PUSCH is a PUSCH scheduled by RAR and transmitted within the uplink sub-band, obtaining the frequency domain resource allocation indication according to the bandwidth of the uplink sub-band, as well as the Frequency Domain Resource Assignment (FDRA) field bits and/or other information field bits of the RAR; or,
when the PUSCH is a PUSCH scheduled by DCI Format 0_0 scrambled with TC-RNTI and transmitted in the uplink sub-band, obtaining the frequency domain resource allocation indication according to the bandwidth of the uplink sub-band, and the FDRA field bits and/or other information field bits of the DCI.

Optionally, the obtaining the frequency domain resource allocation indication according to the bandwidth of the uplink sub-band, and the FDRA field bits and/or other information field bits of the DCI, includes:

If the bandwidth of the uplink sub-band is less than or equal to N, using the

$$\left\lceil \log_2 \left( N_{subband}^{size} \cdot \left( N_{subband}^{size} + 1 \right) \middle/ 2 \right) \right\rceil$$ lower information bits of the FDRA field of the RAR as the frequency domain resource allocation indication, where N is a preset value greater than 0 and represents the bandwidth size of the uplink sub-band; or

If the bandwidth of the uplink sub-band is greater than N, inserting $\left\lceil \log_2 \left( N_{subband}^{size} \cdot \left( N_{subband}^{size} + 1 \right) \middle/ 2 \right) \right\rceil$-k bits of 0 into the higher bits after m bits in the FDRA field of the RAR as the frequency domain resource allocation indication, where $N_{UL,hop}^{RAR}$ is used to indicate the number of frequency hopping bits in the FDRA field of the RAR and is determined by the frequency hopping identifier of the first preset information field in the RAR and the number of PRBs contained in the initial UL BWP bandwidth, and k is a preset value greater than 0; or

If the bandwidth of the uplink sub-band is greater than N, using the FDRA field bits of the RAR together with

$$\left\lceil \log_2 \left( N_{subband}^{size} \cdot \left( N_{subband}^{size} + 1 \right) \middle/ 2 \right) \right\rceil\text{-k}$$ bits from other information fields of the RAR as the frequency domain resource allocation indication.

Optionally, the obtaining the frequency domain resource allocation indication according to the bandwidth of the uplink sub-band, and the FDRA field bits and/or other information field bits of the DCI, includes:

If the bandwidth of the uplink sub-band is less than or equal to the initial UL BWP, using the

$$\left\lceil \log_2 \left( N_{subband}^{size} \cdot \left( N_{subband}^{size} + 1 \right) \middle/ 2 \right) \right\rceil$$ lower information bits of the FDRA field of the DCI as the frequency domain resource allocation indication; or

If the bandwidth of the uplink sub-band is greater than the initial UL BWP, inserting m bits of 0 into the higher bits after $N_{UL,hop}^{DCI}$ bits in the FDRA field of the DCI as the frequency domain resource allocation indication, wherein

$$m = \left\lceil \log_2 \left( N_{subband}^{size} \cdot \left( N_{subband}^{size} + 1 \right) \middle/ 2 \right) \right\rceil - \left\lceil \log_2 \left( N_{iniBWP}^{size} \cdot \left( N_{iniBWP}^{size} + 1 \right) \middle/ 2 \right) \right\rceil$$ , and $N_{UL,hop}^{DCI}$ indicates the number of frequency hopping bits in the FDRA field of the DCI and are determined by the frequency hopping identifier of the second preset information field in the DCI and the number of PRBs contained in the bandwidth of the initial UL BWP, $N_{subband}^{size}$ represents the bandwidth size of the uplink sub-band, and $N_{iniBWP}^{size}$ represents the bandwidth size of the initial UL BWP; or

If the bandwidth of the uplink sub-band is greater than the initial UL BWP, the FDRA field bits of the DCI together with m bits from other information fields of the DCI are used as the frequency domain resource allocation indication.

Optionally, when mapping from VRB to Physical Resource Blocks (PRB), determining the frequency domain resource location of the PUSCH through a target mode based on at least one of the starting RB location of the uplink sub-band, the starting RB location of the active UL BWP, and the starting RB location of the initial UL BWP, includes:
When it is determined that the target condition is satisfied, mapping from VRB to PRB, determining the frequency domain resource location of the PUSCH through a target mode based on at least one of the starting RB location of the uplink sub-band, the starting RB location of the active UL BWP, and the starting RB location of the initial UL BWP.

Optionally, the target condition includes one of the following conditions:

when the initial UL BWP and the active UL BWP are the same, or the initial UL BWP is within the bandwidth range of the active UL BWP and the subcarrier spacing (CSC) and cyclic prefix (CP) are the same, the uplink sub-band part is contained in the bandwidth range of the active UL BWP; or

when the initial UL BWP is not contained within the bandwidth range of the active UL BWP, or the CSC and CP of the initial UL BWP and the active UL BWP are different, the uplink sub-band is not contained in the initial UL BWP bandwidth range starting from the initial RB of the active UL BWP; or

the uplink sub-band is not contained within the bandwidth range of the initial UL BWP.

Optionally, the method further includes:
when the PUSCH is located in the time-domain resources corresponding to the uplink sub-band, when mapping from VRB to Physical Resource Blocks (PRB), determining the frequency domain resource location of the PUSCH through a target mode based on at least one of the starting RB location of the uplink sub-band, the starting RB location of the active UL BWP, and the starting RB location of the initial UL BWP.

Optionally, the method further includes:

determining whether the PUSCH is located in the time-domain resources corresponding to the uplink sub-band based on higher-layer signaling configuration; or

determining whether the PUSCH is located in the time-domain resources corresponding to the uplink sub-band through an explicit indication mode.

Optionally, determining whether the PUSCH is located in the time-domain resources corresponding to the uplink sub-band through an explicit indication mode includes:

when the PUSCH is a PUSCH scheduled by the RAR, indicating whether the PUSCH is located in the time-domain resources corresponding to the uplink sub-band through reserved bits; or

when the PUSCH is a PUSCH scheduled by the DCI, indicating whether the PUSCH is located in the time-domain resources corresponding to the uplink sub-band through newly added information field bits; or

when the PUSCH is a PUSCH scheduled by the DCI, indicating whether the PUSCH is located in the time-domain resources corresponding to the uplink sub-band by reusing part of the information field bits in the DCI;

determining whether the PUSCH is located in the time-domain resources corresponding to the uplink sub-band through the PRACH sequence corresponding to the PUSCH; or

determining whether the PUSCH is located in the time-domain resources corresponding to the uplink sub-band through the PRACH resource corresponding to the PUSCH.

Optionally, the method further includes:
determining the frequency-domain resources of the uplink sub-band through a notification message sent by the network-side device, wherein the frequency-domain resources of the uplink sub-band include the starting RB location of the uplink sub-band and the bandwidth of the uplink sub-band.

To achieve the above purpose, the embodiments of the present disclosure further provide a resource determination method applied to a network-side device, including:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP); wherein the PUSCH is a PUSCH scheduled by Random Access Response (RAR) or a PUSCH scheduled by Downlink Control Information (DCI) scrambled by a Temporary Cell Radio Network Temporary Identifier (TC-RNTI).

Optionally, determining the frequency domain resource location of the PUSCH based on the starting RB location of the uplink sub-band, the starting RB location of the active UL BWP, and the starting RB location of the initial UL BWP includes:

determining Virtual Resource Blocks (VRB) based on frequency-domain resource allocation indication, wherein the frequency-domain resource allocation indication is used to indicate the starting RB number of the VRB and the number of consecutive allocated RBs;
when mapping from VRB to PRB, determining the frequency domain resource location of the PUSCH through a target mode based on at least one of the starting RB location of the uplink sub-band, the starting RB location of the active UL BWP, and the starting RB location of the initial UL BWP.

Optionally, the target mode includes one of the following modes:

when the starting RB number of the uplink sub-band is referenced to the starting location of the carrier, and the VRB number is n, the corresponding PRB number is n + starting RB number of the uplink sub-band -starting RB number of the active UL BWP, where the carrier refers to the carrier on which the uplink sub-band, the initial UL BWP, and the active UL BWP reside; or
when the starting RB number of the uplink sub-band is referenced to the starting location of the initial UL BWP, and the VRB number is n, the corresponding PRB number is n + starting RB number of the uplink sub-band + starting RB number of the UL BWP - starting RB number of the active UL BWP; or
when the starting RB number of the uplink sub-band is referenced to the starting location of the active UL BWP, and the VRB number is n, the corresponding PRB number is n + starting RB number of the uplink sub-band.

Optionally, the method further includes:

obtaining frequency-domain resource allocation indication based on the bandwidth of the uplink sub-band; or
obtaining frequency-domain resource allocation indication based on the initial UL BWP.

Optionally, obtaining the frequency-domain resource allocation indication based on the bandwidth of the uplink sub-band includes:

when the PUSCH is a PUSCH scheduled by the RAR and transmitted within the uplink sub-band, obtaining the frequency-domain resource allocation indication based on the bandwidth of the uplink sub-band and the FDRA field bits of the RAR and/or other information field bits; or
when the PUSCH is a PUSCH scheduled by DCI Format 0_0 scrambled with TC-RNTI and transmitted within the uplink sub-band, obtaining the frequency-domain resource allocation indication based on the bandwidth of the uplink sub-band and the FDRA field bits of the DCI and/or other information field bits.

Optionally, the obtaining the frequency domain resource allocation indication according to the bandwidth of the uplink sub-band, and the FDRA field bits and/or other information field bits of the DCI, includes:

If the bandwidth of the uplink sub-band is less than or equal to N, using the

$$\left\lceil \log_2 \left( N_{subband}^{size} \cdot \left( N_{subband}^{size} + 1 \right) \middle/ 2 \right) \right\rceil$$

lower information bits of the FDRA field of the RAR as the frequency domain resource allocation indication, where N is a preset value greater than 0 and represents the bandwidth size of the uplink sub-band; or

If the bandwidth of the uplink sub-band is greater than N, inserting $\left\lceil \log_2 \left( N_{subband}^{size} \cdot \left( N_{subband}^{size} + 1 \right) \middle/ 2 \right) \right\rceil$ bits of 0 into the higher bits after m bits in the FDRA field of the RAR as the frequency domain resource allocation indication, where $N_{UL,hop}^{RAR}$ is used to indicate the number of frequency hopping bits in the FDRA field of the RAR and is determined by the frequency hopping identifier of the first preset information field in the RAR and the number of PRBs contained in the initial UL BWP bandwidth, and k is a preset value greater than 0; or
If the bandwidth of the uplink sub-band is greater than N, using the FDRA field bits of the RAR together with

$$\left\lceil \log_2 \left( N_{subband}^{size} \cdot \left( N_{subband}^{size} + 1 \right)/2 \right) \right\rceil$$

bits from other information fields of the RAR as the frequency domain resource allocation indication.

Optionally, the obtaining the frequency domain resource allocation indication according to the bandwidth of the uplink sub-band, and the FDRA field bits and/or other information field bits of the DCI, includes:

If the bandwidth of the uplink sub-band is less than or equal to the initial UL BWP, using the

$$\left\lceil \log_2 \left( N_{subband}^{size} \cdot \left( N_{subband}^{size} + 1 \right)/2 \right) \right\rceil$$

lower information bits of the FDRA field of the DCI as the frequency domain resource allocation indication; or

If the bandwidth of the uplink sub-band is greater than the initial UL BWP, inserting m bits of 0 into the higher bits after

$$N_{UL,hop}^{DCI}$$

bits in the FDRA field of the DCI as the frequency domain resource allocation indication, wherein

$$m = \left\lceil \log_2 \left( N_{subband}^{size} \cdot \left( N_{subband}^{size} + 1 \right)/2 \right) \right\rceil - \left\lceil \log_2 \left( N_{iniBWP}^{size} \cdot \left( N_{iniBWP}^{size} + 1 \right)/2 \right) \right\rceil \quad , \text{ and} \quad N_{UL,hop}^{DCI}$$

indicates the number of frequency hopping bits in the FDRA field of the DCI and are determined by the frequency hopping identifier of the second preset information field in the DCI and the number of PRBs contained in the bandwidth of the initial UL BWP, $N_{subband}^{size}$ represents the bandwidth size of the uplink sub-band, and $N_{iniBWP}^{size}$ represents the bandwidth size of the initial UL BWP; or

If the bandwidth of the uplink sub-band is greater than the initial UL BWP, the FDRA field bits of the DCI together with m bits from other information fields of the DCI are used as the frequency domain resource allocation indication.

Optionally, when mapping from VRB to Physical Resource Blocks (PRB), determining the frequency domain resource location of the PUSCH through a target mode based on at least one of the starting RB location of the uplink sub-band, the starting RB location of the active UL BWP, and the starting RB location of the initial UL BWP, includes:
When it is determined that the target condition is satisfied, mapping from VRB to PRB, determining the frequency domain resource location of the PUSCH through a target mode based on at least one of the starting RB location of the uplink sub-band, the starting RB location of the active UL BWP, and the starting RB location of the initial UL BWP.

Optionally, the target condition includes one of the following conditions:

when the initial UL BWP and the active UL BWP are the same, or the initial UL BWP is within the bandwidth range of the active UL BWP and the subcarrier spacing (CSC) and cyclic prefix (CP) are the same, the uplink sub-band part is contained in the bandwidth range of the active UL BWP; or

when the initial UL BWP is not contained within the bandwidth range of the active UL BWP, or the CSC and CP of the initial UL BWP and the active UL BWP are different, the uplink sub-band is not contained in the initial UL BWP bandwidth range starting from the initial RB of the active UL BWP; or

the uplink sub-band is not contained within the bandwidth range of the initial UL BWP.

Optionally, the method further includes:
when the PUSCH is located in the time-domain resources corresponding to the uplink sub-band, when mapping from VRB to Physical Resource Blocks (PRB), determining the frequency domain resource location of the PUSCH through a target mode based on at least one of the starting RB location of the uplink sub-band, the starting RB location of the active UL BWP, and the starting RB location of the initial UL BWP.

Optionally, the method further includes:

determining whether the PUSCH is located in the time-domain resources corresponding to the uplink sub-band based on higher-layer signaling configuration; or

determining whether the PUSCH is located in the time-domain resources corresponding to the uplink sub-band through an explicit indication mode.

Optionally, determining whether the PUSCH is located in the time-domain resources corresponding to the uplink sub-band through an explicit indication mode includes:

when the PUSCH is a PUSCH scheduled by the RAR, indicating whether the PUSCH is located in the time-domain resources corresponding to the uplink sub-band through reserved bits; or

when the PUSCH is a PUSCH scheduled by the DCI, indicating whether the PUSCH is located in the time-domain resources corresponding to the uplink sub-band through newly added information field bits; or

when the PUSCH is a PUSCH scheduled by the DCI, indicating whether the PUSCH is located in the time-domain resources corresponding to the uplink sub-band by reusing part of the information field bits in the DCI;

determining whether the PUSCH is located in the time-domain resources corresponding to the uplink sub-band through the PRACH sequence corresponding to the PUSCH; or

determining whether the PUSCH is located in the time-domain resources corresponding to the uplink sub-band through the PRACH resource corresponding to the PUSCH.

Optionally, the method further includes:

sending a notification message to the terminal, wherein the notification message is used to enable the terminal to determine the frequency-domain resources of the uplink sub-band, and the frequency-domain resources of the uplink sub-band include the starting RB location of the uplink sub-band and the bandwidth of the uplink sub-band.

To achieve the above purpose, an embodiment of the present disclosure further provides a terminal, including: a memory, a transceiver, and a processor. The memory is used to store a computer program. The transceiver is used to send and receive data under the control of the processor. The processor is used to read the computer program stored in the memory and execute the following steps:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP);

wherein the PUSCH is a PUSCH scheduled by Random Access Response (RAR) or a PUSCH scheduled by Downlink Control Information (DCI) scrambled by a Temporary Cell Radio Network Temporary Identifier (TC-RNTI).

To achieve the above purpose, an embodiment of the present disclosure further provides a resource determination device, including:

a first resource determination unit, configured to determine the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP);

wherein the PUSCH is a PUSCH scheduled by Random Access Response (RAR) or a PUSCH scheduled by Downlink Control Information (DCI) scrambled by a Temporary Cell Radio Network Temporary Identifier (TC-RNTI).

To achieve the above purpose, an embodiment of the present disclosure further provides a network-side device, including: a memory, a transceiver, and a processor. The memory is used to store a computer program. The transceiver is used to send and receive data under the control of the processor. The processor is used to read the computer program stored in the memory and execute the following steps:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP);

wherein the PUSCH is a PUSCH scheduled by Random Access Response (RAR) or a PUSCH scheduled by Downlink Control Information (DCI) scrambled by a Temporary Cell Radio Network Temporary Identifier (TC-RNTI).

To achieve the above purpose, an embodiment of the present disclosure further provides another resource determination device, including:

a second resource determination unit, configured to determine the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP);

wherein the PUSCH is a PUSCH scheduled by Random Access Response (RAR) or a PUSCH scheduled by Downlink Control Information (DCI) scrambled by a Temporary Cell Radio Network Temporary Identifier (TC-RNTI).

To achieve the above purpose, an embodiment of the present disclosure further provides a processor-readable storage medium, wherein the processor-readable storage medium stores a computer program that is used to enable the processor to execute the steps of the above-described resource determination method.

The above technical solution of this disclosure offers at least the following beneficial effects:

In the technical solution provided by the embodiment of the present disclosure, the frequency domain resource location of the Physical Uplink Shared Channel (PUSCH) is determined based on at least one of the starting Resource Block (RB) location of the uplink sub-band, the starting RB location of the activated uplink Bandwidth Part (active UL BWP), and the starting RB location of the initial uplink Bandwidth Part (initial UL BWP). The PUSCH is either a PUSCH scheduled by Random Access Response (RAR) or a PUSCH scheduled by Downlink Control Information (DCI) scrambled by a Temporary Cell Radio Network Temporary Identifier (TC-RNTI). In this way, for the PUSCH scheduled by RAR or by DCI scrambled with TC-RNTI, this method can determine the frequency domain resource location of the PUSCH, thus achieving the transmission of the PUSCH within the range of the uplink sub-band.

## BRIEF DESCRIPTION OF THE DRAWINGS

Fig. 1 is a schematic diagram of the frequency domain resource location of the uplink sub-band in one embodiment of the present disclosure;

Fig. 2 is a schematic diagram of the frequency domain resource location of the uplink sub-band in another embodiment of the present disclosure;

Fig. 3 is a schematic diagram of the frequency domain resource location of the uplink sub-band in yet another embodiment of the present disclosure;

Fig. 4 is a flow diagram of the resource determination method in one embodiment of the present disclosure;

Fig. 5 is a flow diagram of the resource determination method in another embodiment of the present disclosure;

Fig. 6 is a structural block diagram of a terminal in one embodiment of the present disclosure;

Fig. 7 is a schematic diagram of the modules of the resource determination device in one embodiment of the present disclosure;

Fig. 8 is a structural block diagram of the network-side device in one embodiment of the present disclosure;

Fig. 9 is a schematic diagram of the modules of the resource determination device in another embodiment of the present disclosure.

## DETAILED DESCRIPTION

The term "and/or" in the embodiments of the present disclosure describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

The term "multiple" in the embodiments of the present disclosure refers to two or more, and other quantifiers are similar thereto.

The technical solution of embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

The following introduces related technologies in the present field.

1. Duplex Mode

5G NR supports Time Division Duplex (TDD) and Frequency Division Duplex (FDD). TDD and FDD refer to two duplex communication modes in mobile communication technology. TDD refers to the time-division duplex mode, while FDD refers to the frequency-division duplex mode. In TDD mode, transmission and reception are carried out on the same frequency channel or carrier at different times, differentiating uplink and downlink transmission resources by time. In FDD mode, transmission and reception occur simultaneously on different frequency channels, differentiating uplink and downlink transmission resources by frequency.

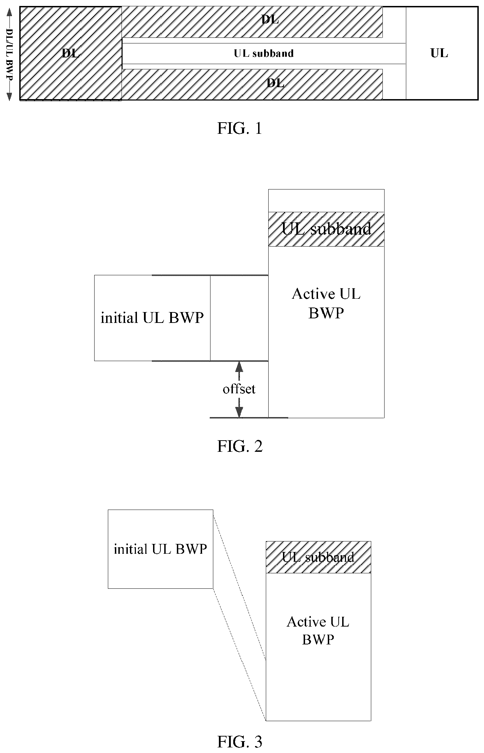

In 5G NR Rel-18, sub-band non-overlapping full-duplex will be supported. This means that a base station can transmit and receive simultaneously within a single TDD frequency band/carrier/BandWidth Part (BWP) through different sub-bands, with no overlap between the sub-bands used for transmission and reception. As shown in Fig. 1, the uplink sub-band exists in certain symbols and does not overlap with other frequency domain resources.

2. Frequency Domain Resource Determination

In the R15-R17 protocols, for the transmission of a Physical Uplink Shared Channel (PUSCH) scheduled by Random Access Response (RAR) uplink grant (UL grant) or Downlink Control Information (DCI) format 0_0 scrambled with a Temporary Cell-Radio Network Temporary Identifier (TC-RNTI), the related information for frequency domain resource determination is as follows:

a) FDRA Field

The Frequency Domain Resource Allocation (FDRA) field in the RAR UL grant contains fixed 14-bit information (for the granted spectrum resources) to indicate the frequency-domain resources for the PUSCH scheduled by the RAR UL grant. Frequency domain resource allocation uses resource allocation type 1.

For cases where the bandwidth of the initial UpLink Bandwidth Part (initial UL BWP) is less than or equal to 180 Resource Blocks (RBs), $\left\lceil \log_2\left( N_{BWP}^{size} \cdot \left( N_{BWP}^{size} + 1\right)\big/2 \right) \right\rceil$ lower bits of the FDRA field are used as the frequency domain resource allocation indication.

For cases where the bandwidth $N_{BWP}^{size}$ of the initial UL BWP exceeds 180 RBs, $\left\lceil \log_2\left( N_{BWP}^{size} \cdot \left( N_{BWP}^{size} + 1\right)\big/2 \right) \right\rceil - 14$ zero bits are inserted into the higher bits after $N_{UL,hop}$ bits in the FDRA field, forming the frequency domain resource allocation indication. Here, $N_{UL,hop}$ indicates the number of hopping bits in the FDRA field.

When determining the frequency domain resource allocation for the PUSCH scheduled by the RAR UL grant within the activated uplink Bandwidth Part (active UL BWP), the bandwidth of the initial UL BWP is used to interpret the FDRA field.

The FDRA field in the TC-RNTI scrambled DCI format 0_0 determines the number of bits based on the bandwidth size of the initial UL BWP and can only indicate the Physical Resource Block (PRB) resources within the bandwidth range of the initial UL BWP.

b) Mapping from Virtual Resource Block (VRB) to Physical Resource Block (PRB)

Case 1: If the initial UL BWP and the active UL BWP are the same, or if the initial UL BWP is within the range of the active UL BWP and the subcarrier spacing (SCS) and cyclic prefix (CP) are the same, then the number of the Virtual Resource Block (VRB) allocated for frequency domain resources is based on the initial UL BWP (i.e., VRB specifies the starting RB location and length within the range of the initial UL BWP). When mapping from VRB to PRB, an offset is added which is the offset between the starting RB of the initial UL BWP and the starting RB of the active UL BWP. If the VRB number is denoted by n, the corresponding PRB number is n + starting RB number of initial UL BWP - starting RB number of active UL BWP.

Case 2: In scenarios other than Case 1, the frequency-domain resource allocation for the PUSCH is based on the starting RB location of the active UL BWP and allocated according to the bandwidth of the initial UL BWP. If the VRB number is denoted by n, the corresponding PRB number is n.

For Case 1, if the location of the uplink sub-band does not fall within the bandwidth range of the initial UL BWP (as shown in Fig. 2), the frequency domain resource allocation information in the RAR UL grant or the TC-RNTI scrambled DCI format 0_0 cannot indicate the PUSCH transmission within the uplink sub-band.

For Case 2, if the location of the uplink sub-band does not fall within the first N RBs of the active UL BWP (as shown in Fig. 3), where N represents the number of RBs of the initial UL BWP, the frequency domain resource allocation information in the RAR UL grant or the TC-RNTI scrambled DCI format 0_0 cannot indicate the PUSCH transmission within the uplink sub-band.

In other words, in the scenario of sub-band non-overlapping full-duplex, for the PUSCH scheduled by the RAR UL grant or the TC-RNTI scrambled DCI, if the PUSCH is scheduled in the uplink sub-band but the uplink sub-band does not fall within the bandwidth range of the initial UL BWP or its location does not lie within the first N RBs of the active UL BWP, it becomes impossible to indicate the PUSCH transmission within the uplink sub-band. Thus, the PUSCH transmission within the uplink sub-band cannot be achieved.

To address the aforementioned technical problems, embodiments of the present disclosure provide a resource determination method, device, terminal, and network-side equipment. The methods and devices are based on the same inventive concept. Since the principles for solving the issues are similar for both the method and the device, the implementation of the device and the method may refer to each other, and repeated descriptions are omitted.

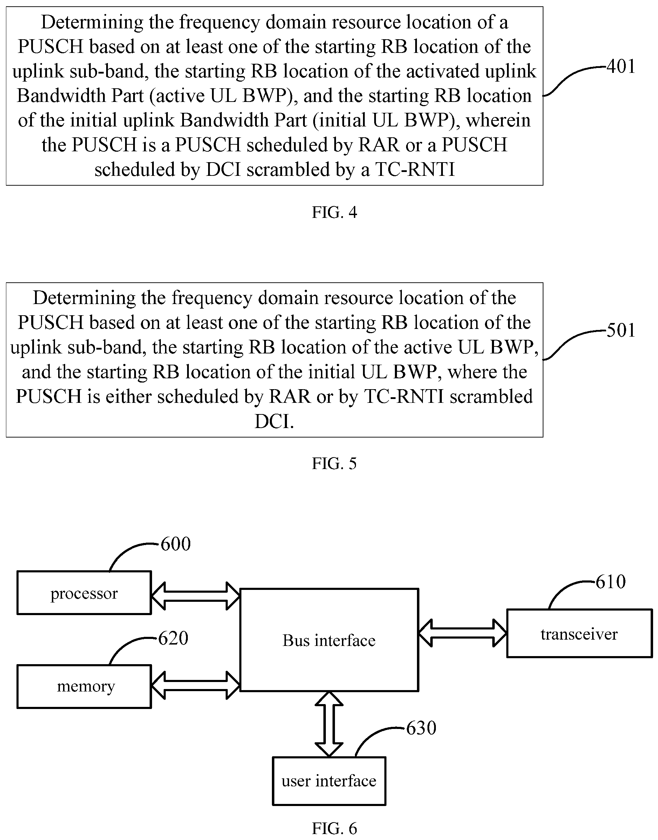

As shown in Fig. 4, Fig. 4 is a flow diagram of a resource determination method provided in an embodiment of the present disclosure, which is applied to a terminal. The method may include:

Step 401: determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP), wherein the PUSCH is a PUSCH scheduled by Random Access Response (RAR) or a PUSCH scheduled by Downlink Control Information (DCI) scrambled by a Temporary Cell-Radio Network Temporary Identifier (TC-RNTI).

Optionally, the starting RB location of the uplink sub-band is determined through a notification message sent by the network-side device.

In an optional implementation, the method according to the embodiment of this application may also include: determining the frequency-domain resources of the uplink sub-band through a notification message sent by the network-side device, wherein the frequency-domain resources of the uplink sub-band include the starting RB location of the uplink sub-band and the bandwidth of the uplink sub-band.

That is, by determining the frequency-domain resources of the uplink sub-band through a notification message sent by the network-side device, the starting RB location of the uplink sub-band is also determined.

As an optional implementation, Step 401 may specifically include:

determining the Virtual Resource Block (VRB) based on the frequency domain resource allocation indication, wherein the frequency domain resource allocation indication is used to indicate the starting RB number of the VRB and the number of consecutive allocated RBs.

When mapping from the VRB to the Physical Resource Block (PRB), determining the frequency domain resource location of the PUSCH through a target mode based on at least one of the starting RB location of the uplink sub-band, the starting RB location of the active UL BWP, and the starting RB location of the initial UL BWP.

Optionally, the target mode includes one of the following modes:

- when the starting RB number of the uplink sub-band is referenced to the carrier's starting location, and the VRB number is n, the corresponding PRB number is n + starting RB number of the uplink sub-band - starting RB number of the active UL BWP, where the carrier is the one to which the uplink sub-band, initial UL BWP, and active UL BWP belong; or
- when the starting RB number of the uplink sub-band is referenced to the starting location of the initial UL BWP, and the VRB number is n, the corresponding PRB number is n + starting RB number of the uplink sub-band + starting RB number of the initial UL BWP - starting RB number of the active UL BWP; or
- when the starting RB number of the uplink sub-band is referenced to the starting location of the active UL BWP, and the VRB number is n, the corresponding PRB number is n + starting RB number of the uplink sub-band.

It should be noted that if the uplink sub-band is considered as the active UL BWP, the above target modes for determining the frequency domain resource location of the PUSCH are equivalent to one of the following modes:

- when the starting RB number of the uplink sub-band is referenced to the carrier's starting location, and the VRB number is n, the corresponding PRB number is n, where the carrier is the one to which the uplink sub-band belongs; or
- when the starting RB number of the uplink sub-band is referenced to the starting location of the initial UL BWP, and the VRB number is n, the corresponding PRB number is n + starting RB number of the initial UL BWP; or
- when the starting RB number of the uplink sub-band is referenced to the starting location of the active UL BWP, and the VRB number is n, the corresponding PRB number is n + starting RB number of the uplink sub-band (or active UL BWP).

It should be noted that the reference location for the starting RB number of the uplink sub-band can be notified or indicated by the network-side device (e.g., base station), or agreed by protocol.

It should be noted that it can be inferred from the determination of the VRB based on the frequency domain resource allocation indication that, to determine the VRB, the frequency domain resource allocation indication must first be obtained. Therefore, in an optional implementation, the method of the embodiment of the present disclosure may also include:

obtaining the frequency domain resource allocation indication based on the bandwidth of the uplink sub-band; or
obtaining the frequency domain resource allocation indication based on the initial UL BWP.

It should be noted that the bandwidth of the uplink sub-band can be determined through a notification message sent by the network-side device.

As an optional implementation, obtaining the frequency domain resource allocation indication based on the bandwidth of the uplink sub-band may specifically include:
when the PUSCH is a PUSCH scheduled by the RAR and transmitted within the uplink sub-band, obtaining the frequency domain resource allocation indication based on the bandwidth of the uplink sub-band, as well as the FDRA field bits of the RAR and/or other information field bits.

Specifically, this step may include:

1) If the bandwidth of the uplink sub-band is less than or equal to N, using the $\left\lceil \log_2 \left( N_{subband}^{size} \cdot \left( N_{subband}^{size} + 1 \right) / 2 \right) \right\rceil$ lower information bits in the FDRA field of the RAR as the frequency domain resource allocation indication, where N is a preset value greater than 0 and $N_{subband}^{size}$ represents the bandwidth size of the uplink sub-band.

Here, N is a preset value greater than 0, which can also be a predefined value in the protocol.

Alternatively, 2) If the bandwidth of the uplink sub-band is greater than N, inserting $\left\lceil \log_2 \left( N_{subband}^{size} \cdot \left( N_{subband}^{size} + 1 \right) / 2 \right) \right\rceil$ zero bits into the higher bits after $N_{UL,hop}^{RAR}$ bits in the FDRA field of the RAR as the frequency domain resource allocation indication, where $N_{UL,hop}^{RAR}$ is used to indicate the number of hopping bits in the FDRA field of the RAR. These are determined by the hopping identifier of the first preset information field in the RAR and the number of PRBs contained within the initial UL BWP bandwidth, where k is a preset value greater than 0.

It should be noted that the value of $N_{UL,hop}^{RAR}$ can be 0, 1, or 2. K is a preset value greater than 0, which can also be understood as a predefined value in the protocol.

Optionally, N is 180 and k is 14, i.e., 14 bits correspond to 180 RBs.

Alternatively, 3) If the bandwidth of the uplink sub-band is greater than N, using the FDRA field bits of the RAR together with $\left\lceil \log_2 \left( N_{subband}^{size} \cdot \left( N_{subband}^{size} + 1 \right) / 2 \right) \right\rceil$ bits from other information fields of the RAR as the frequency domain resource allocation indication.

In an example, if the base station schedules a PUSCH transmitted within the uplink sub-band via the RAR:

If the uplink sub-band occupies 50 RBs, the FDRA field of the RAR uses $\left\lceil \log_2 \left( N_{subband}^{size} \cdot \left( N_{subband}^{size} + 1 \right) / 2 \right) \right\rceil = 11$ lower information bits to indicate transmission within the 50 RB range of the uplink sub-band.

If the uplink sub-band occupies 200 RBs, inserting $\left\lceil \log_2 \left( N_{subband}^{size} \cdot \left( N_{subband}^{size} + 1 \right) / 2 \right) \right\rceil - 14 = 1$ zero bits into the higher bits after $N_{UL,hop}^{RAR}$ bits in the FDRA field of the RAR as the frequency domain resource allocation indication; or reusing 1 bit of information from the RAR together with the FDRA field bits of the RAR as the frequency domain resource allocation indication.

When the PUSCH is scheduled by a TC-RNTI scrambled DCI format 0_0 and transmitted within the uplink sub-band, obtaining the frequency domain resource allocation indication based on the bandwidth of the uplink sub-band, as well as the FDRA field bits of the DCI and/or other information field bits.

Specifically, this step may include:

a) If the bandwidth of the uplink sub-band is less than or equal to the initial UL BWP, using the $\left\lceil \log_2 \left( N_{subband}^{size} \cdot \left( N_{subband}^{size} + 1 \right) / 2 \right) \right\rceil$ lower information bits in the FDRA field of the DCI as the frequency domain resource allocation indication;

Or, b) If the bandwidth of the uplink sub-band is greater than the initial UL BWP, inserting m zero bits into the higher bits after $N_{UL,hop}^{DCI}$ bits in the FDRA field of the DCI as the frequency domain resource allocation indication, where

$$m = \left\lceil \log_2\left(N_{subband}^{size} \cdot \left(N_{subband}^{size} + 1\right)/2\right)\right\rceil - \left\lceil \log_2\left(N_{iniBWP}^{size} \cdot \left(N_{iniBWP}^{size} + 1\right)/2\right)\right\rceil \,, \quad N_{UL,hop}^{DCI} \text{ is}$$

used to indicate the number of hopping bits in the FDRA field of the DCI, and is determined by the hopping identifier of the second preset information field in the DCI and the number of PRBs contained within the initial UL BWP bandwidth, where $N_{subband}^{size}$ represents the bandwidth size of the uplink sub-band and $N_{iniBWP}^{size}$ represents the bandwidth size of the initial UL BWP.

Or, c) If the bandwidth of the uplink sub-band is greater than the initial UL BWP, using the FDRA field bits of the DCI together with m bits from other information fields of the DCI as the frequency domain resource allocation indication.

In an example, if the base station schedules a PUSCH transmitted within the uplink sub-band via the TC-RNTI scrambled DCI format 0_0 and the bandwidth of the initial UL BWP is 100 RBs:

If the uplink sub-band occupies 50 RBs, the FDRA field of the DCI uses $\left\lceil \log_2\left(N_{subband}^{size} \cdot \left(N_{subband}^{size} + 1\right)/2\right)\right\rceil = 11$ lower information bits to indicate transmission within the 50 RB range of the uplink sub-band.

If the uplink sub-band occupies 200 RBs, inserting $\left\lceil \log_2\left(N_{subband}^{size} \cdot \left(N_{subband}^{size} + 1\right)/2\right)\right\rceil - \left\lceil \log_2\left(N_{iniBWP}^{size} \cdot \left(N_{iniBWP}^{size} + 1\right)/2\right)\right\rceil = 1$ zero bits into the higher bits after $N_{UL,hop}^{RAR}$ bits in the FDRA field of the DCI as the frequency domain resource allocation indication; or reusing 1 bit of information from the DCI together with the FDRA field bits of the RAR as the frequency domain resource allocation indication.

In an optional implementation, when mapping from Virtual Resource Blocks (VRB) to Physical Resource Blocks (PRB), the frequency domain resource location of the Physical Uplink Shared Channel (PUSCH) is determined through a target mode based on at least one of the starting Resource Block (RB) location of the uplink sub-band, the starting RB location of the activated uplink Bandwidth Part (active UL BWP), or the starting RB location of the initial uplink Bandwidth Part (initial UL BWP). Specifically:

When it is determined that the target condition is satisfied, during the mapping from VRB to PRB, the frequency domain resource location of the PUSCH is determined through a target mode based on at least one of the starting RB location of the uplink sub-band, the starting RB location of the active UL BWP, or the starting RB location of the initial UL BWP.

Optionally, the target conditions include one of the following:

When the initial UL BWP and the active UL BWP are the same, or when the initial UL BWP falls within the bandwidth range of the active UL BWP and the Subcarrier Spacing (SCS) and Cyclic Prefix (CP) are the same, the uplink sub-band falls within the bandwidth range of the active UL BWP; or

When the initial UL BWP does not fall within the range of the active UL BWP, or when the SCS and CP of the initial UL BWP and the active UL BWP differ, the uplink sub-band does not fall within the initial UL BWP bandwidth range starting from the first RB of the active UL BWP; or

The uplink sub-band does not fall within the initial UL BWP bandwidth range.

As an optional implementation, the method provided in an embodiment of this disclosure may further include: when the PUSCH is located within the time-domain resources corresponding to the uplink sub-band, the mapping from VRB to PRB determines the PUSCH's frequency domain resource location based on the starting RB location of the uplink sub-band, the starting RB location of the active UL BWP, and the starting RB location of the initial UL BWP using a target mode.

Specifically, the method provided in the embodiment of this disclosure may also include:

Determining whether the PUSCH is located within the time-domain resources of the uplink sub-band based on higher-layer signaling configurations.

In detail, determining whether the PUSCH lies in the time units corresponding to the uplink sub-band involves checking if it resides in slots/symbols with both uplink and downlink transmissions (Subband Non-overlapping Full Duplex, SBFD symbols).

Alternatively, determining whether the PUSCH is located within time-domain resources via explicit indication.

Optionally, this step may specifically include:

1. When the PUSCH is scheduled by a Random Access Response (RAR), reserved bits are used to indicate whether the PUSCH is located within the time-domain resources corresponding to the uplink sub-band; or

2. When the PUSCH is scheduled by Downlink Control Information (DCI), additional information field bits are used to indicate whether the PUSCH is located within the time-domain resources corresponding to the uplink sub-band; or

3. When the PUSCH is scheduled by DCI, reused information field bits in the DCI are used to indicate whether the PUSCH is located within the time-domain resources corresponding to the uplink sub-band; or

4. Determining whether the PUSCH is located within the time-domain resources through the Physical Random Access Channel (PRACH) sequence corresponding to the PUSCH; or

5. Determining whether the PUSCH is located within the time-domain resources through the PRACH resources corresponding to the PUSCH.

The resource determination method provided in the embodiments of this disclosure determines the frequency domain resource location of the PUSCH based on at least one of the starting RB location of the uplink sub-band, the starting RB location of the active UL BWP, and the starting RB location of the initial UL BWP. The PUSCH could be either scheduled by RAR or by TC-RNTI scrambled DCI. Accordingly, for a PUSCH scheduled by RAR or by TC-RNTI scrambled DCI, the described method ensures the determination of the PUSCH's frequency domain resource location, enabling its transmission within the range of the uplink sub-band.

As shown in Fig. 5, this is a flowchart of the resource determination method provided in an embodiment of this disclosure, applied to network-side equipment. The method may include:

Step 501: Determining the frequency domain resource location of the PUSCH based on at least one of the starting RB location of the uplink sub-band, the starting RB location of the active UL BWP, and the starting RB location of the initial UL BWP, where the PUSCH is either scheduled by RAR or by TC-RNTI scrambled DCI.

The resource determination method provided in this disclosure determines the frequency domain resource location of the PUSCH based on at least one of the starting RB location of the uplink sub-band, the starting RB location of the active UL BWP, and the starting RB location of the initial UL BWP. The PUSCH could be either scheduled by RAR or by TC-RNTI scrambled DCI. This ensures the determination of the PUSCH's frequency domain resource location, enabling its transmission within the range of the uplink sub-band.

As an optional implementation, Step 501 may specifically include:

determining the VRB based on the frequency domain resource allocation indication, where the frequency domain resource allocation indication specifies the starting RB number of the VRB and the number of consecutive allocated RBs.

Mapping from VRB to PRB is performed using a target mode based on at least one of the starting RB location of the uplink sub-band, the starting RB location of the active UL BWP, and the starting RB location of the initial UL BWP to determine the frequency domain resource location of the PUSCH.

Optionally, the target mode includes one of the following:

When the starting RB number of the uplink sub-band is referenced to the carrier's starting location and the VRB number is n, the corresponding PRB number is n + starting RB number of the uplink sub-band - starting RB number of the active UL BWP, where the carrier refers to the one to which the uplink sub-band, initial UL BWP, and active UL BWP belong; or

When the starting RB number of the uplink sub-band is referenced to the starting location of the initial UL BWP and the VRB number is n, the corresponding PRB number is n + starting RB number of the uplink sub-band + starting RB number of the initial UL BWP - starting RB number of the active UL BWP; or

When the starting RB number of the uplink sub-band is referenced to the starting location of the active UL BWP and the VRB number is n, the corresponding PRB number is n + starting RB number of the uplink sub-band.

It should be noted that the reference location for the starting RB number of the uplink sub-band can be determined by the network-side device (e.g., base station) and notified or indicated to the terminal, or defined by protocol.

It should be noted that since determining the VRB is based on the frequency domain resource allocation indication, obtaining the frequency domain resource allocation indication is a prerequisite for determining the VRB. Therefore, as an optional implementation, this disclosure's method may also include:

obtaining the frequency domain resource allocation indication based on the bandwidth of the uplink sub-band; or obtaining the frequency domain resource allocation indication based on the initial UL BWP.

As an optional implementation, obtaining the frequency domain resource allocation indication based on the bandwidth of the uplink sub-band may specifically include:

When the PUSCH is scheduled by the RAR and transmitted within the uplink sub-band, obtaining the frequency domain resource allocation indication based on the bandwidth of the uplink sub-band, as well as the FDRA field bits of the RAR and/or other information field bits.

Specifically, this step may include:

d-1) If the bandwidth of the uplink sub-band is less than or equal to N, using the

$$\left\lceil \log_2 \left( N_{\text{subband}}^{\text{size}} \cdot \left( N_{\text{subband}}^{\text{size}} + 1 \right) / 2 \right) \right\rceil$$ lower information bits in the FDRA field of the RAR as the frequency domain resource allocation indication, where N is a preset value greater than 0 and $N_{\text{subband}}^{\text{size}}$ represents the bandwidth size of the uplink sub-band.

Here, N is a preset value greater than 0, which can also be a predefined value in the protocol.

Alternatively, d-2) If the bandwidth of the uplink sub-band is greater than N, inserting

$$\left\lceil \log_2 \left( N_{\text{subband}}^{\text{size}} \cdot \left( N_{\text{subband}}^{\text{size}} + 1 \right) / 2 \right) \right\rceil$$ -k zero bits into the higher bits after $N_{\text{UL,hop}}^{\text{RAR}}$ bits in the FDRA field of the RAR as the frequency domain resource allocation indication, where $N_{\text{UL,hop}}^{\text{RAR}}$ is used to indicate the number of hopping bits in the FDRA field of the RAR. These are determined by the hopping identifier of the first preset information field in the RAR and the number of PRBs contained within the initial UL BWP bandwidth, where k is a preset value greater than 0.

It should be noted that the value of $N_{\text{UL,hop}}^{\text{RAR}}$ can be 0, 1, or 2. K is a preset value greater than 0, which can also be understood as a predefined value in the protocol.

Optionally, N is 180 and k is 14, i.e., 14 bits correspond to 180 RBs.

Alternatively, d-3) If the bandwidth of the uplink sub-band is greater than N, using the FDRA field bits of the RAR

together with $$\left\lceil \log_2 \left( N_{\text{subband}}^{\text{size}} \cdot \left( N_{\text{subband}}^{\text{size}} + 1 \right) / 2 \right) \right\rceil$$ -k bits from other information fields of the RAR as the frequency domain resource allocation indication.

When the PUSCH is scheduled by a TC-RNTI scrambled DCI format 0_0 and transmitted within the uplink sub-band, obtaining the frequency domain resource allocation indication based on the bandwidth of the uplink sub-band, as well as the FDRA field bits of the DCI and/or other information field bits.

Specifically, this step may include:

e) If the bandwidth of the uplink sub-band is less than or equal to the initial UL BWP, using the

$$\left\lceil \log_2 \left( N_{\text{subband}}^{\text{size}} \cdot \left( N_{\text{subband}}^{\text{size}} + 1 \right) / 2 \right) \right\rceil$$ lower information bits in the FDRA field of the DCI as the frequency domain resource allocation indication;

Or, f) If the bandwidth of the uplink sub-band is greater than the initial UL BWP, inserting m zero bits into the higher bits after $N_{\text{UL,hop}}^{\text{DCI}}$ bits in the FDRA field of the DCI as the frequency domain resource allocation indication, where

$$m = \left\lceil \log_2 \left( N_{\text{subband}}^{\text{size}} \cdot \left( N_{\text{subband}}^{\text{size}} + 1 \right) / 2 \right) \right\rceil - \left\lceil \log_2 \left( N_{\text{iniBWP}}^{\text{size}} \cdot \left( N_{\text{iniBWP}}^{\text{size}} + 1 \right) / 2 \right) \right\rceil$$ , $N_{\text{UL,hop}}^{\text{DCI}}$ is

used to indicate the number of hopping bits in the FDRA field of the DCI, and is determined by the hopping identifier of the second preset information field in the DCI and the number of PRBs contained within the initial UL BWP bandwidth, where $N_{\text{subband}}^{\text{size}}$ represents the bandwidth size of the uplink sub-band and $N_{\text{iniBWP}}^{\text{size}}$ represents the bandwidth size of the initial UL BWP.

Or, g) If the bandwidth of the uplink sub-band is greater than the initial UL BWP, using the FDRA field bits of the DCI together with m bits from other information fields of the DCI as the frequency domain resource allocation indication.

In an optional implementation, when mapping from Virtual Resource Blocks (VRB) to Physical Resource Blocks (PRB), the frequency domain resource location of the Physical Uplink Shared Channel (PUSCH) is determined through a target mode based on at least one of the starting Resource Block (RB) location of the uplink sub-band, the starting RB location of the activated uplink Bandwidth Part (active UL BWP), and the starting RB location of the initial uplink Bandwidth Part (initial UL BWP). This may specifically include:

when it is determined that the target conditions are satisfied, during the mapping from VRB to PRB, the frequency domain resource location of the PUSCH is determined using a target mode based on at least one of the starting RB location of the uplink sub-band, the starting RB location of the active UL BWP, or the starting RB location of the initial UL BWP.

Optionally, the target conditions include one of the following:

when the initial UL BWP and the active UL BWP are the same, or when the initial UL BWP falls within the bandwidth range of the active UL BWP and the Subcarrier Spacing (SCS) and Cyclic Prefix (CP) are the same, the uplink sub-band is included within the active UL BWP bandwidth range; or

when the initial UL BWP does not fall within the active UL BWP range, or when the SCS and CP of the initial UL BWP and the active UL BWP are different, the uplink sub-band is not included in the bandwidth range starting from the first RB within the initial UL BWP of the active UL BWP; or

the uplink sub-band is not included within the bandwidth range of the initial UL BWP.

As an optional implementation, the method in the embodiment of the disclosure may further include: when the PUSCH is located within the time-domain resources corresponding to the uplink sub-band, during the mapping from VRB to PRB, the frequency domain resource location of the PUSCH is determined via a target mode based on at least one of the starting RB location of the uplink sub-band, the starting RB location of the active UL BWP, or the starting RB location of the initial UL BWP.

Specifically, the method in the embodiment of the disclosure may further include: determining whether the PUSCH is located in the time-domain resources corresponding to the uplink sub-band based on higher-layer signaling configurations.

In detail, determining whether the PUSCH resides in the time units corresponding to the uplink sub-band means checking whether it is located in slots/symbols where uplink and downlink transmissions coexist (Subband Non-overlapping Full Duplex (SBFD) symbols).

Alternatively, the determination of whether the PUSCH is located within the time-domain resources corresponding to the uplink sub-band can be made through explicit indication.

Optionally, this step may specifically include:

1. When the PUSCH is a PUSCH scheduled by a Random Access Response (RAR), reserved bits are used to indicate whether the PUSCH is located within the time-domain resources corresponding to the uplink sub-band; or

2. When the PUSCH is a PUSCH scheduled by Downlink Control Information (DCI), additional information field bits are used to indicate whether the PUSCH is located within the time-domain resources corresponding to the uplink sub-band; or

3. When the PUSCH is a PUSCH scheduled by DCI, reused information field bits in the DCI are used to indicate whether the PUSCH is located within the time-domain resources corresponding to the uplink sub-band; or

4. Determining whether the PUSCH is located within the time-domain resources through the Physical Random Access Channel (PRACH) sequence corresponding to the PUSCH; or

5. Determining whether the PUSCH is located within the time-domain resources through the PRACH resources corresponding to the PUSCH.

In an optional implementation, the method provided in the embodiment of the disclosure may further include: Sending a notification message to the terminal, wherein the notification message helps the terminal determine the frequency-domain resources of the uplink sub-band. The frequency-domain resources of the uplink sub-band include the starting RB location of the uplink sub-band and the bandwidth of the uplink sub-band.

The resource determination method provided in the embodiment of the disclosure determines the frequency domain resource location of the Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP). The PUSCH could either be scheduled by a Random Access Response (RAR) or by Downlink Control Information (DCI) scrambled by a Temporary Cell-Radio Network Temporary Identifier (TC-RNTI). Using this method, the frequency domain resource location of such PUSCHs can be accurately determined, enabling their transmission within the scope of the uplink sub-band.

As shown in Fig. 6, an embodiment of the present disclosure also provides a terminal, including: memory 620, transceiver 610, processor 600: memory 620, used to store program instructions; transceiver 610, used for sending and receiving data under the control of processor 600; processor 600, used to read the program instructions stored in memory 620 and perform the following operations:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP), wherein the PUSCH may either be scheduled by a Random Access Response (RAR) or scheduled by Downlink Control Information (DCI) scrambled with a Temporary Cell-Radio Network Temporary Identifier (TC-RNTI).

In Fig. 6, the bus architecture may include any number of interconnected buses and bridges, specifically linking various circuits represented by one or more processors 600 and memory represented by memory 620. The bus architecture may also link various other circuits, such as peripherals, regulators, and power management circuits, which are well-known in the art and will not be further described herein. A bus interface provides the interface. Transceiver 610 may consist of multiple components, including a transmitter and a receiver, and serves as a unit for communicating with various other devices over transmission media, such as wireless channels, wired channels, optical cables, and the like. For different user equipment, the user interface 630 may also serve as an interface capable of connecting external or internal devices as needed. The connected devices include, but are not limited to, a keypad, display, speaker, microphone, joystick, and so on.

Processor 600 is responsible for managing the bus architecture and general processing, while memory 620 can store data used by processor 600 when performing operations.

Optionally, the processor 600 may be a Central Processing Unit (CPU), Application-Specific Integrated Circuit (ASIC), Field-Programmable Gate Array (FPGA), or Complex Programmable Logic Device (CPLD). Processor 600 may also adopt a multi-core architecture.

The processor 600, by invoking program instructions stored in memory, is used to execute any of the methods provided in embodiments of this application according to obtained executable instructions. Processor 600 and memory 620 may also be physically arranged separately.

Optionally, the processor 600 is further configured to:

determine the Virtual Resource Block (VRB) based on the frequency domain resource allocation indication, wherein the frequency domain resource allocation indication is used to indicate the starting RB number of the VRB and the number of consecutive allocated RBs.

When mapping from the VRB to the Physical Resource Block (PRB), determining the frequency domain resource location of the PUSCH through a target mode based on at least one of the starting RB location of the uplink sub-band, the starting RB location of the active UL BWP, and the starting RB location of the initial UL BWP.

Optionally, the target mode includes one of the following modes:

when the starting RB number of the uplink sub-band is referenced to the carrier's starting location, and the VRB number is n, the corresponding PRB number is n + starting RB number of the uplink sub-band - starting RB number of the active UL BWP, where the carrier is the one to which the uplink sub-band, initial UL BWP, and active UL BWP belong; or
when the starting RB number of the uplink sub-band is referenced to the starting location of the initial UL BWP, and the VRB number is n, the corresponding PRB number is n + starting RB number of the uplink sub-band + starting RB number of the initial UL BWP - starting RB number of the active UL BWP; or
when the starting RB number of the uplink sub-band is referenced to the starting location of the active UL BWP, and the VRB number is n, the corresponding PRB number is n + starting RB number of the uplink sub-band.

Optionally, the processor 600 is further configured to:

obtain frequency domain resource allocation indication based on the bandwidth of the uplink sub-band; or,
obtain frequency domain resource allocation indication based on the initial UL BWP.

Optionally, the processor 600 is further configured to:

when the PUSCH is a PUSCH scheduled by RAR and transmitted within the uplink sub-band, obtain the frequency domain resource allocation indication according to the bandwidth of the uplink sub-band, as well as the Frequency Domain Resource Assignment (FDRA) field bits and/or other information field bits of the RAR; or,
when the PUSCH is a PUSCH scheduled by DCI Format 0_0 scrambled with TC-RNTI and transmitted in the uplink sub-band, obtain the frequency domain resource allocation indication according to the bandwidth of the uplink sub-band, and the FDRA field bits and/or other information field bits of the DCI.

Optionally, the processor 600 is further configured to:

if the bandwidth of the uplink sub-band is less than or equal to N, use the $\left\lceil \log_2 \left( N_{subband}^{size} \cdot \left( N_{subband}^{size} + 1 \right) / 2 \right) \right\rceil$ lower information bits of the FDRA field of the RAR as the frequency domain resource allocation indication, where N is a preset value greater than 0 and represents the bandwidth size of the uplink sub-band; or

if the bandwidth of the uplink sub-band is greater than N, insert $\left\lceil \log_2\left( N_{\text{subband}}^{\text{size}} \cdot \left( N_{\text{subband}}^{\text{size}} + 1 \right)/2 \right) \right\rceil$ -k bits of 0 into the higher bits after m bits in the FDRA field of the RAR as the frequency domain resource allocation indication, where $N_{\text{UL,hop}}^{\text{RAR}}$ is used to indicate the number of frequency hopping bits in the FDRA field of the RAR and is determined by the frequency hopping identifier of the first preset information field in the RAR and the number of PRBs contained in the initial UL BWP bandwidth, and k is a preset value greater than 0; or

if the bandwidth of the uplink sub-band is greater than N, using the FDRA field bits of the RAR together with

$$\left\lceil \log_2\left( N_{\text{subband}}^{\text{size}} \cdot \left( N_{\text{subband}}^{\text{size}} + 1 \right)/2 \right) \right\rceil$$ bits from other information fields of the RAR as the frequency domain resource allocation indication.

Optionally, the processor 600 is further configured to:

if the bandwidth of the uplink sub-band is less than or equal to the initial UL BWP, using the

$$\left\lceil \log_2\left( N_{\text{subband}}^{\text{size}} \cdot \left( N_{\text{subband}}^{\text{size}} + 1 \right)/2 \right) \right\rceil$$ lower information bits of the FDRA field of the DCI as the frequency domain resource allocation indication; or

if the bandwidth of the uplink sub-band is greater than the initial UL BWP, insert m bits of 0 into the higher bits after $N_{\text{UL,hop}}^{\text{DCI}}$ bits in the FDRA field of the DCI as the frequency domain resource allocation indication, wherein

$$m = \left\lceil \log_2\left( N_{\text{subband}}^{\text{size}} \cdot \left( N_{\text{subband}}^{\text{size}} + 1 \right)/2 \right) \right\rceil - \left\lceil \log_2\left( N_{\text{iniBWP}}^{\text{size}} \cdot \left( N_{\text{iniBWP}}^{\text{size}} + 1 \right)/2 \right) \right\rceil \qquad N_{\text{UL,hop}}^{\text{DCI}}$$ , and

indicates the number of frequency hopping bits in the FDRA field of the DCI and are determined by the frequency hopping identifier of the second preset information field in the DCI and the number of PRBs contained in the bandwidth of the initial UL BWP, $N_{\text{subband}}^{\text{size}}$ represents the bandwidth size of the uplink sub-band, and $N_{\text{iniBWP}}^{\text{size}}$ represents the bandwidth size of the initial UL BWP; or

if the bandwidth of the uplink sub-band is greater than the initial UL BWP, the FDRA field bits of the DCI together with m bits from other information fields of the DCI are used as the frequency domain resource allocation indication.

Optionally, the processor 600 is further configured to:
when it is determined that the target condition is satisfied, and when mapping from VRB to PRB, determine the frequency domain resource location of the PUSCH through a target mode based on at least one of the starting RB location of the uplink sub-band, the starting RB location of the active UL BWP, and the starting RB location of the initial UL BWP.

Optionally, the target condition includes one of the following conditions:

when the initial UL BWP and the active UL BWP are the same, or the initial UL BWP is within the bandwidth range of the active UL BWP and the subcarrier spacing (CSC) and cyclic prefix (CP) are the same, the uplink sub-band part is contained in the bandwidth range of the active UL BWP; or

when the initial UL BWP is not contained within the bandwidth range of the active UL BWP, or the CSC and CP of the initial UL BWP and the active UL BWP are different, the uplink sub-band is not contained in the initial UL BWP bandwidth range starting from the initial RB of the active UL BWP; or

the uplink sub-band is not contained within the bandwidth range of the initial UL BWP.

Optionally, the processor 600 is further configured to:
when the PUSCH is located in the time-domain resources corresponding to the uplink sub-band, when mapping from VRB to Physical Resource Blocks (PRB), determine the frequency domain resource location of the PUSCH through a target mode based on at least one of the starting RB location of the uplink sub-band, the starting RB location of the active UL BWP, and the starting RB location of the initial UL BWP.

Optionally, the processor 600 is further configured to:

determine whether the PUSCH is located in the time-domain resources corresponding to the uplink sub-band based on higher-layer signaling configuration; or

determine whether the PUSCH is located in the time-domain resources corresponding to the uplink sub-band through an explicit indication mode.

Optionally, the processor 600 is further configured to:

when the PUSCH is a PUSCH scheduled by the RAR, indicate whether the PUSCH is located in the time-domain resources corresponding to the uplink sub-band through reserved bits; or

when the PUSCH is a PUSCH scheduled by the DCI, indicate whether the PUSCH is located in the time-domain resources corresponding to the uplink sub-band through newly added information field bits; or

when the PUSCH is a PUSCH scheduled by the DCI, indicate whether the PUSCH is located in the time-domain resources corresponding to the uplink sub-band by reusing part of the information field bits in the DCI;

determine whether the PUSCH is located in the time-domain resources corresponding to the uplink sub-band through the PRACH sequence corresponding to the PUSCH; or

determine whether the PUSCH is located in the time-domain resources corresponding to the uplink sub-band through the PRACH resource corresponding to the PUSCH.

Optionally, the processor 600 is further configured to:

determine the frequency-domain resources of the uplink sub-band through a notification message sent by the network-side device, wherein the frequency-domain resources of the uplink sub-band include the starting RB location of the uplink sub-band and the bandwidth of the uplink sub-band.

The terminal in the embodiment of the present disclosure determines the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP). Here, the PUSCH may either be scheduled by a Random Access Response (RAR) or by Downlink Control Information (DCI) scrambled by a Temporary Cell-Radio Network Temporary Identifier (TC-RNTI). In this way, for a PUSCH scheduled by an RAR or DCI scrambled with TC-RNTI, the aforementioned method enables the determination of the PUSCH's frequency domain resource location, achieving transmission of the PUSCH within the range of the uplink sub-band.

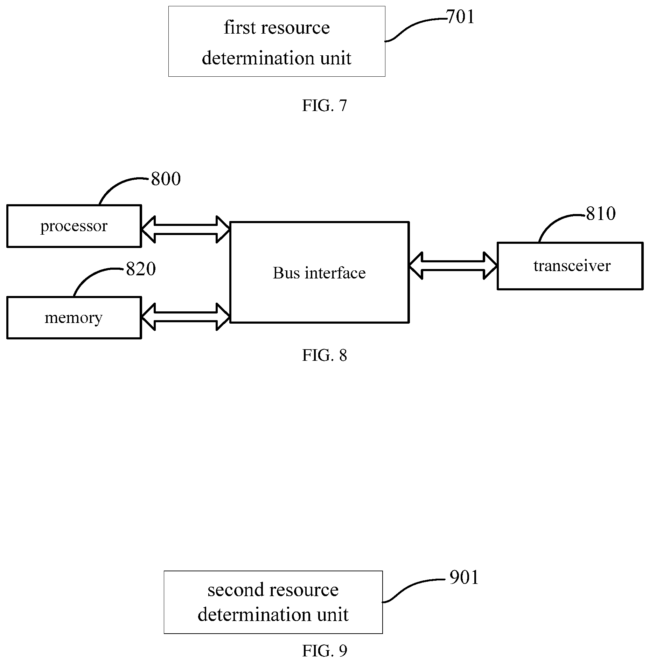

As shown in Fig. 7, the embodiment of the present disclosure also provides a resource determination device, including:

a first resource determination unit 701, configured to determine the frequency domain resource location of a Physical Uplink Shared Channel (PUSCH) based on at least one of the starting RB location of the uplink sub-band, the starting RB location of the active UL BWP, and the starting RB location of the initial UL BWP. Here, the PUSCH may either be scheduled by a Random Access Response (RAR) or by Downlink Control Information (DCI) scrambled by a Temporary Cell-Radio Network Temporary Identifier (TC-RNTI).

Optionally, the first resource determination unit 701 is specifically configured to:

determine Virtual Resource Blocks (VRB) based on a frequency domain resource allocation indication, wherein the frequency domain resource allocation indication specifies the starting RB number of the VRB and the number of consecutive allocated RBs;

when mapping from VRB to Physical Resource Blocks (PRB), determine the frequency domain resource location of the PUSCH through a target mode based on at least one of the starting RB location of the uplink sub-band, the starting RB location of the active UL BWP, and the starting RB location of the initial UL BWP.

Optionally, the target mode includes one of the following modes:

when the starting RB number of the uplink sub-band is referenced to the carrier's starting location, and the VRB number is n, the corresponding PRB number is n + starting RB number of the uplink sub-band - starting RB number of the active UL BWP, where the carrier is the one to which the uplink sub-band, initial UL BWP, and active UL BWP belong; or

when the starting RB number of the uplink sub-band is referenced to the starting location of the initial UL BWP, and the VRB number is n, the corresponding PRB number is n + starting RB number of the uplink sub-band + starting RB number of the initial UL BWP - starting RB number of the active UL BWP; or

when the starting RB number of the uplink sub-band is referenced to the starting location of the active UL BWP, and the VRB number is n, the corresponding PRB number is n + starting RB number of the uplink sub-band.

Optionally, the resource determination device further includes:

a first obtaining unit for obtaining frequency domain resource allocation indication based on the bandwidth of the uplink sub-band; or,
a second obtaining unit for obtaining frequency domain resource allocation indication based on the initial UL BWP.

Optionally, the first obtaining unit is configured to:

when the PUSCH is a PUSCH scheduled by RAR and transmitted within the uplink sub-band, obtain the frequency domain resource allocation indication according to the bandwidth of the uplink sub-band, as well as the Frequency Domain Resource Assignment (FDRA) field bits and/or other information field bits of the RAR; or,
when the PUSCH is a PUSCH scheduled by DCI Format 0_0 scrambled with TC-RNTI and transmitted in the uplink sub-band, obtain the frequency domain resource allocation indication according to the bandwidth of the uplink sub-band, and the FDRA field bits and/or other information field bits of the DCI.

Optionally, the first obtaining unit is configured to:

if the bandwidth of the uplink sub-band is less than or equal to N, use the $\left\lceil \log_2\left(N_{\text{subband}}^{\text{size}} \cdot \left(N_{\text{subband}}^{\text{size}}+1\right)/2\right)\right\rceil$ lower information bits of the FDRA field of the RAR as the frequency domain resource allocation indication, where N is a preset value greater than 0 and represents the bandwidth size of the uplink sub-band; or

if the bandwidth of the uplink sub-band is greater than N, insert $\left\lceil \log_2\left(N_{\text{subband}}^{\text{size}} \cdot \left(N_{\text{subband}}^{\text{size}}+1\right)/2\right)\right\rceil$ bits of 0 into the higher bits after m bits in the FDRA field of the RAR as the frequency domain resource allocation indication, where $N_{UL,hop}^{RAR}$ is used to indicate the number of frequency hopping bits in the FDRA field of the RAR and is determined by the frequency hopping identifier of the first preset information field in the RAR and the number of PRBs contained in the initial UL BWP bandwidth, and k is a preset value greater than 0; or

if the bandwidth of the uplink sub-band is greater than N, using the FDRA field bits of the RAR together with $\left\lceil \log_2\left(N_{\text{subband}}^{\text{size}} \cdot \left(N_{\text{subband}}^{\text{size}}+1\right)/2\right)\right\rceil$ bits from other information fields of the RAR as the frequency domain resource allocation indication.

Optionally, the first obtaining unit is configured to:

if the bandwidth of the uplink sub-band is less than or equal to the initial UL BWP, using the $\left\lceil \log_2\left(N_{\text{subband}}^{\text{size}} \cdot \left(N_{\text{subband}}^{\text{size}}+1\right)/2\right)\right\rceil$ lower information bits of the FDRA field of the DCI as the frequency domain resource allocation indication; or

if the bandwidth of the uplink sub-band is greater than the initial UL BWP, insert m bits of 0 into the higher bits after $N_{UL,hop}^{DCI}$ bits in the FDRA field of the DCI as the frequency domain resource allocation indication, wherein $m=\left\lceil \log_2\left(N_{\text{subband}}^{\text{size}} \cdot \left(N_{\text{subband}}^{\text{size}}+1\right)/2\right)\right\rceil - \left\lceil \log_2\left(N_{\text{iniBWP}}^{\text{size}} \cdot \left(N_{\text{iniBWP}}^{\text{size}}+1\right)/2\right)\right\rceil$, and $N_{UL,hop}^{DCI}$ indicates the number of frequency hopping bits in the FDRA field of the DCI and are determined by the frequency hopping identifier of the second preset information field in the DCI and the number of PRBs contained in the bandwidth of the initial UL BWP, $N_{\text{subband}}^{\text{size}}$ represents the bandwidth size of the uplink sub-band, and $N_{\text{iniBWP}}^{\text{size}}$ represents the bandwidth size of the initial UL BWP; or

if the bandwidth of the uplink sub-band is greater than the initial UL BWP, the FDRA field bits of the DCI together with m bits from other information fields of the DCI are used as the frequency domain resource allocation indication.

Optionally, the first resource determination unit 701 is configured to:
when it is determined that the target condition is satisfied, and when mapping from VRB to PRB, determine the frequency domain resource location of the PUSCH through a target mode based on at least one of the starting RB location of the uplink sub-band, the starting RB location of the active UL BWP, and the starting RB location of the initial UL BWP.

Optionally, the target condition includes one of the following conditions:

when the initial UL BWP and the active UL BWP are the same, or the initial UL BWP is within the bandwidth range of the active UL BWP and the subcarrier spacing (CSC) and cyclic prefix (CP) are the same, the uplink sub-band part is contained in the bandwidth range of the active UL BWP; or

when the initial UL BWP is not contained within the bandwidth range of the active UL BWP, or the CSC and CP of the initial UL BWP and the active UL BWP are different, the uplink sub-band is not contained in the initial UL BWP bandwidth range starting from the initial RB of the active UL BWP; or
the uplink sub-band is not contained within the bandwidth range of the initial UL BWP.

Optionally, the first resource determination unit 701 is configured to:
when the PUSCH is located in the time-domain resources corresponding to the uplink sub-band, when mapping from VRB to Physical Resource Blocks (PRB), determine the frequency domain resource location of the PUSCH through a target mode based on at least one of the starting RB location of the uplink sub-band, the starting RB location of the active UL BWP, and the starting RB location of the initial UL BWP.

Optionally, the resource determination device of the present embodiment further includes:

a first determination unit, configured to determine whether the PUSCH is located in the time-domain resources corresponding to the uplink sub-band based on higher-layer signaling configuration; or
a second determination unit, configured to determine whether the PUSCH is located in the time-domain resources corresponding to the uplink sub-band through an explicit indication mode.

Optionally, the second determination unit is configured to:

when the PUSCH is a PUSCH scheduled by the RAR, indicate whether the PUSCH is located in the time-domain resources corresponding to the uplink sub-band through reserved bits; or
when the PUSCH is a PUSCH scheduled by the DCI, indicate whether the PUSCH is located in the time-domain resources corresponding to the uplink sub-band through newly added information field bits; or
when the PUSCH is a PUSCH scheduled by the DCI, indicate whether the PUSCH is located in the time-domain resources corresponding to the uplink sub-band by reusing part of the information field bits in the DCI;
determine whether the PUSCH is located in the time-domain resources corresponding to the uplink sub-band through the PRACH sequence corresponding to the PUSCH; or
determine whether the PUSCH is located in the time-domain resources corresponding to the uplink sub-band through the PRACH resource corresponding to the PUSCH.

Optionally, the resource determination device of the present embodiment further includes:
a third determination unit, configured to determine the frequency-domain resources of the uplink sub-band through a notification message sent by the network-side device, wherein the frequency-domain resources of the uplink sub-band include the starting RB location of the uplink sub-band and the bandwidth of the uplink sub-band.

According to the embodiment of the present disclosure, the resource determination device determines the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP). Here, the PUSCH may either be scheduled by a Random Access Response (RAR) or by Downlink Control Information (DCI) scrambled by a Temporary Cell-Radio Network Temporary Identifier (TC-RNTI). In this way, for a PUSCH scheduled by an RAR or by DCI scrambled with TC-RNTI, the aforementioned method enables the determination of the PUSCH's frequency domain resource location, achieving transmission of the PUSCH within the range of the uplink sub-band.

It should be noted that the division of units in the embodiments of the present disclosure is illustrative, and is only a logical function division, and there may be another division method in actual implementation. In addition, the functional units in various embodiments of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute all or part of the steps of the methods described in the various embodiments of the present disclosure. The aforementioned storage media include: a universal serial bus (USB) flash drive, removable hard disk, read-only memory (ROM), random access memory (RAM), magnetic disk, optical disc or other media that can store program codes.

It should be noted here that the above-mentioned device provided in the embodiment of the disclosure is capable of implementing all the method steps achieved in the embodiments of the service cell management method on the network device side described above and achieving the same technical effects. Therefore, parts of the embodiment identical to those of the method embodiments and their advantageous effects will not be redundantly described.

In some embodiments of the present disclosure, a processor-readable storage medium is further provided. The processor-readable storage medium stores program instructions configured to enable the processor to perform the following steps:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP), wherein the PUSCH may either be scheduled by a Random Access Response (RAR) or by Downlink Control Information (DCI) scrambled by a Temporary Cell-Radio Network Temporary Identifier (TC-RNTI).

When executed, the program enables the processor to achieve all implementations of the method embodiment applicable to the terminal side as illustrated in Fig. 4. To avoid repetition, details are omitted here.

As shown in Fig. 8, an embodiment of the present disclosure also provides a network-side device, including: memory 820, transceiver 810, and processor 800. Memory 820 is used to store a computer program; transceiver 810 is used to send and receive data under the control of processor 800; processor 800 is used to read the computer program stored in memory 820 and perform the following steps:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP), wherein the PUSCH may either be scheduled by a Random Access Response (RAR) or by Downlink Control Information (DCI) scrambled by a Temporary Cell-Radio Network Temporary Identifier (TC-RNTI).

In Fig. 8, the bus architecture may include any number of interconnected buses and bridges, specifically linking various circuits represented by one or more processors 800 and memory represented by memory 820. The bus architecture may also link various other circuits, such as peripherals, regulators, and power management circuits, which are well-known in the art and will not be further described herein. A bus interface provides the interface. Transceiver 810 may consist of multiple components, including both a transmitter and a receiver, serving as units for communicating with various other devices over transmission media, including wireless channels, wired channels, optical cables, and similar transmission media.

Processor 800 is responsible for managing the bus architecture and general processing, while memory 820 can store data used by processor 800 during operation.

The processor 800 may be a Central Processing Unit (CPU), Application-Specific Integrated Circuit (ASIC), Field-Programmable Gate Array (FPGA), or Complex Programmable Logic Device (CPLD), and it may also adopt a multi-core architecture.

Optionally, the processor 800 is further configured to:

determine the VRB based on the frequency domain resource allocation indication, where the frequency domain resource allocation indication specifies the starting RB number of the VRB and the number of consecutive allocated RBs;

when mapping from VRB to PRB, determine the frequency domain resource location of the PUSCH using a target mode based on at least one of the starting RB location of the uplink sub-band, the starting RB location of the active UL BWP, and the starting RB location of the initial UL BWP.

Optionally, the target mode includes one of the following:

When the starting RB number of the uplink sub-band is referenced to the carrier's starting location and the VRB number is n, the corresponding PRB number is n + starting RB number of the uplink sub-band - starting RB number of the active UL BWP, where the carrier refers to the one to which the uplink sub-band, initial UL BWP, and active UL BWP belong; or

When the starting RB number of the uplink sub-band is referenced to the starting location of the initial UL BWP and the VRB number is n, the corresponding PRB number is n + starting RB number of the uplink sub-band + starting RB number of the initial UL BWP - starting RB number of the active UL BWP; or

When the starting RB number of the uplink sub-band is referenced to the starting location of the active UL BWP and the VRB number is n, the corresponding PRB number is n + starting RB number of the uplink sub-band.

Optionally, the processor 800 is further configured to:

obtain the frequency domain resource allocation indication based on the bandwidth of the uplink sub-band; or
obtain the frequency domain resource allocation indication based on the initial UL BWP.

Optionally, the processor 800 is further configured to:

when the PUSCH is scheduled by the RAR and transmitted within the uplink sub-band, obtain the frequency domain resource allocation indication based on the bandwidth of the uplink sub-band, as well as the FDRA field bits of the RAR and/or other information field bits; or,
when the PUSCH is scheduled by TC-RNTI scrambled DCI format 0_0 and transmitted within the uplink sub-band, obtain the frequency domain resource allocation indication based on the bandwidth of the uplink sub-band, as well as the FDRA field bits of the DCI and/or other information field bits.

Optionally, the processor 800 is further configured to:

If the bandwidth of the uplink sub-band is less than or equal to N, use the $\left\lceil \log_2 \left( N_{subband}^{size} \cdot \left( N_{subband}^{size} + 1 \right) / 2 \right) \right\rceil$ lower information bits in the FDRA field of the RAR as the frequency domain resource allocation indication, where N is a preset value greater than 0 and $N_{subband}^{size}$ represents the bandwidth size of the uplink sub-band.

Alternatively, if the bandwidth of the uplink sub-band is greater than N, insert $\left\lceil \log_2 \left( N_{subband}^{size} \cdot \left( N_{subband}^{size} + 1 \right) / 2 \right) \right\rceil$ zero bits into the higher bits after $N_{UL,hop}^{RAR}$ bits in the FDRA field of the RAR as the frequency domain resource allocation indication, where $N_{UL,hop}^{RAR}$ is used to indicate the number of hopping bits in the FDRA field of the RAR. These are determined by the hopping identifier of the first preset information field in the RAR and the number of PRBs contained within the initial UL BWP bandwidth, where k is a preset value greater than 0.

Alternatively, if the bandwidth of the uplink sub-band is greater than N, use the FDRA field bits of the RAR together with $\left\lceil \log_2 \left( N_{subband}^{size} \cdot \left( N_{subband}^{size} + 1 \right) / 2 \right) \right\rceil$ bits from other information fields of the RAR as the frequency domain resource allocation indication.

Optionally, the processor 800 is further configured to:

If the bandwidth of the uplink sub-band is less than or equal to the initial UL BWP, use the $\left\lceil \log_2 \left( N_{subband}^{size} \cdot \left( N_{subband}^{size} + 1 \right) / 2 \right) \right\rceil$ lower information bits in the FDRA field of the DCI as the frequency domain resource allocation indication;

Or, if the bandwidth of the uplink sub-band is greater than the initial UL BWP, insert m zero bits into the higher bits after $N_{UL,hop}^{DCI}$ bits in the FDRA field of the DCI as the frequency domain resource allocation indication, where $m = \left\lceil \log_2 \left( N_{subband}^{size} \cdot \left( N_{subband}^{size} + 1 \right) / 2 \right) \right\rceil - \left\lceil \log_2 \left( N_{iniBWP}^{size} \cdot \left( N_{iniBWP}^{size} + 1 \right) / 2 \right) \right\rceil$, $N_{UL,hop}^{DCI}$ is used to indicate the number of hopping bits in the FDRA field of the DCI, and is determined by the hopping identifier of the second preset information field in the DCI and the number of PRBs contained within the initial UL BWP bandwidth, where $N_{subband}^{size}$ represents the bandwidth size of the uplink sub-band and $N_{iniBWP}^{size}$ represents the bandwidth size of the initial UL BWP.

Or, if the bandwidth of the uplink sub-band is greater than the initial UL BWP, use the FDRA field bits of the DCI together with m bits from other information fields of the DCI as the frequency domain resource allocation indication.

Optionally, the processor 800 is further configured to:
when it is determined that the target conditions are satisfied, during the mapping from VRB to PRB, determine the frequency domain resource location of the PUSCH by using a target mode based on at least one of the starting RB location of the uplink sub-band, the starting RB location of the active UL BWP, or the starting RB location of the initial UL BWP.

Optionally, the target conditions include one of the following:

when the initial UL BWP and the active UL BWP are the same, or when the initial UL BWP falls within the bandwidth range of the active UL BWP and the Subcarrier Spacing (SCS) and Cyclic Prefix (CP) are the same, the uplink sub-band is included within the active UL BWP bandwidth range; or

when the initial UL BWP does not fall within the active UL BWP range, or when the SCS and CP of the initial UL BWP and the active UL BWP are different, the uplink sub-band is not included in the bandwidth range starting from the first RB within the initial UL BWP of the active UL BWP; or

the uplink sub-band is not included within the bandwidth range of the initial UL BWP.

Optionally, processor 800 is further configured to:
when the PUSCH is located within time-domain resources corresponding to the uplink sub-band, during the mapping from VRB to Physical Resource Block (PRB), determine the frequency domain resource location of the PUSCH through a target mode based on at least one of the starting RB location of the uplink sub-band, the starting RB location of the active UL BWP, and the starting RB location of the initial UL BWP.

Optionally, processor 800 is further configured to:

determine whether the PUSCH is located in time-domain resources corresponding to the uplink sub-band based on higher-layer signaling configuration; or

determine whether the PUSCH is located in time-domain resources corresponding to the uplink sub-band through explicit indication methods.

Optionally, processor 800 is further configured to:

when the PUSCH is a PUSCH scheduled by RAR, indicate whether the PUSCH is located within time-domain resources corresponding to the uplink sub-band through reserved bits; or

when the PUSCH is a PUSCH scheduled by DCI, indicate whether the PUSCH is located within time-domain resources corresponding to the uplink sub-band through additional information field bits; or

when the PUSCH is a PUSCH scheduled by DCI, indicate whether the PUSCH is located within time-domain resources corresponding to the uplink sub-band by reusing certain information field bits in the DCI; or

determine whether the PUSCH is located within time-domain resources corresponding to the uplink sub-band using the PRACH sequence corresponding to the PUSCH; or

determine whether the PUSCH is located within time-domain resources corresponding to the uplink sub-band using PRACH resources corresponding to the PUSCH.

Optionally, transceiver 810 is configured to:
send a notification message to the terminal, wherein the notification message is used to enable the terminal to determine the frequency-domain resources of the uplink sub-band, including the starting RB location of the uplink sub-band and the bandwidth of the uplink sub-band.

According to the embodiment of the present disclosure, the network-side device determines the frequency domain resource location of the PUSCH based on at least one of the starting Resource Block (RB) location of the uplink sub-band, the starting RB location of the activated uplink Bandwidth Part (active UL BWP), and the starting RB location of the initial uplink Bandwidth Part (initial UL BWP). The PUSCH may either be scheduled by a Random Access Response (RAR) or by Downlink Control Information (DCI) scrambled by a Temporary Cell-Radio Network Temporary Identifier (TC-RNTI). Using this method, the frequency domain resource location of such PUSCHs can be accurately determined, achieving the PUSCH transmission within the range of the uplink sub-band.

As shown in Fig. 9, the embodiment of the present disclosure also provides a resource determination device, including:

a second resource determining unit 901, configured to determine the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP), wherein the PUSCH may either be scheduled by a Random Access Response (RAR) or by Downlink Control Information (DCI) scrambled by a Temporary Cell-Radio Network Temporary Identifier (TC-RNTI).

Optionally, the second resource determining unit 901 is specifically configured to:

determine the VRB based on the frequency domain resource allocation indication, where the frequency domain resource allocation indication specifies the starting RB number of the VRB and the number of consecutive allocated RBs;

when mapping from VRB to PRB, determine the frequency domain resource location of the PUSCH using a target mode based on at least one of the starting RB location of the uplink sub-band, the starting RB location of the active UL BWP, and the starting RB location of the initial UL BWP.

Optionally, the target mode includes one of the following:

When the starting RB number of the uplink sub-band is referenced to the carrier's starting location and the VRB number is n, the corresponding PRB number is n + starting RB number of the uplink sub-band - starting RB number of the active UL BWP, where the carrier refers to the one to which the uplink sub-band, initial UL BWP, and active UL BWP belong; or

When the starting RB number of the uplink sub-band is referenced to the starting location of the initial UL BWP and the VRB number is n, the corresponding PRB number is n + starting RB number of the uplink sub-band + starting RB number of the initial UL BWP - starting RB number of the active UL BWP; or

When the starting RB number of the uplink sub-band is referenced to the starting location of the active UL BWP and the VRB number is n, the corresponding PRB number is n + starting RB number of the uplink sub-band.

Optionally, the resource determination device further includes:

a third obtaining unit, configured to obtain the frequency domain resource allocation indication based on the bandwidth of the uplink sub-band; or

a fourth obtaining unit, configured to obtain the frequency domain resource allocation indication based on the initial UL BWP.

Optionally, the third obtaining unit is specifically configured to:

when the PUSCH is scheduled by the RAR and transmitted within the uplink sub-band, obtain the frequency domain resource allocation indication based on the bandwidth of the uplink sub-band, as well as the FDRA field bits of the RAR and/or other information field bits; or,

when the PUSCH is scheduled by TC-RNTI scrambled DCI format 0_0 and transmitted within the uplink sub-band, obtain the frequency domain resource allocation indication based on the bandwidth of the uplink sub-band, as well as the FDRA field bits of the DCI and/or other information field bits.

Optionally, the third obtaining unit is specifically configured to:

If the bandwidth of the uplink sub-band is less than or equal to N, use the $\left\lceil \log_2\left( N_{\text{subband}}^{\text{size}} \cdot \left( N_{\text{subband}}^{\text{size}} + 1 \right) \middle/ 2 \right) \right\rceil$ lower information bits in the FDRA field of the RAR as the frequency domain resource allocation indication, where N is a preset value greater than 0 and $N_{\text{subband}}^{\text{size}}$ represents the bandwidth size of the uplink sub-band.

Alternatively, if the bandwidth of the uplink sub-band is greater than N, insert $\left\lceil \log_2\left( N_{\text{subband}}^{\text{size}} \cdot \left( N_{\text{subband}}^{\text{size}} + 1 \right) \middle/ 2 \right) \right\rceil$ zero bits into the higher bits after $N_{\text{UL,hop}}^{\text{RAR}}$ bits in the FDRA field of the RAR as the frequency domain resource allocation indication, where $N_{\text{UL,hop}}^{\text{RAR}}$ is used to indicate the number of hopping bits in the FDRA field of the RAR. These are determined by the hopping identifier of the first preset information field in the RAR and the number of PRBs contained within the initial UL BWP bandwidth, where k is a preset value greater than 0.

Alternatively, if the bandwidth of the uplink sub-band is greater than N, use the FDRA field bits of the RAR together with $\left\lceil \log_2\left( N_{\text{subband}}^{\text{size}} \cdot \left( N_{\text{subband}}^{\text{size}} + 1 \right)/2 \right) \right\rceil$ -k bits from other information fields of the RAR as the frequency domain resource allocation indication.

Optionally, the third obtaining unit is specifically configured to:

If the bandwidth of the uplink sub-band is less than or equal to the initial UL BWP, use the $\left\lceil \log_2\left( N_{\text{subband}}^{\text{size}} \cdot \left( N_{\text{subband}}^{\text{size}} + 1 \right)/2 \right) \right\rceil$ lower information bits in the FDRA field of the DCI as the frequency domain resource allocation indication;

Or, if the bandwidth of the uplink sub-band is greater than the initial UL BWP, insert m zero bits into the higher bits after $N_{\text{UL,hop}}^{\text{DCI}}$ bits in the FDRA field of the DCI as the frequency domain resource allocation indication, where $m = \left\lceil \log_2\left( N_{\text{subband}}^{\text{size}} \cdot \left( N_{\text{subband}}^{\text{size}} + 1 \right)/2 \right) \right\rceil - \left\lceil \log_2\left( N_{\text{iniBWP}}^{\text{size}} \cdot \left( N_{\text{iniBWP}}^{\text{size}} + 1 \right)/2 \right) \right\rceil$, $N_{\text{UL,hop}}^{\text{DCI}}$ is used to indicate the number of hopping bits in the FDRA field of the DCI, and is determined by the hopping identifier of the second preset information field in the DCI and the number of PRBs contained within the initial UL BWP bandwidth, where $N_{\text{subband}}^{\text{size}}$ represents the bandwidth size of the uplink sub-band and $N_{\text{iniBWP}}^{\text{size}}$ represents the bandwidth size of the initial UL BWP;

Or, if the bandwidth of the uplink sub-band is greater than the initial UL BWP, use the FDRA field bits of the DCI together with m bits from other information fields of the DCI as the frequency domain resource allocation indication.

Optionally, the second resource determining unit 901 is specifically configured to:
when it is determined that the target conditions are satisfied, during the mapping from VRB to PRB, determine the frequency domain resource location of the PUSCH by using a target mode based on at least one of the starting RB location of the uplink sub-band, the starting RB location of the active UL BWP, or the starting RB location of the initial UL BWP.

Optionally, the target conditions include one of the following:

when the initial UL BWP and the active UL BWP are the same, or when the initial UL BWP falls within the bandwidth range of the active UL BWP and the Subcarrier Spacing (SCS) and Cyclic Prefix (CP) are the same, the uplink sub-band is included within the active UL BWP bandwidth range; or
when the initial UL BWP does not fall within the active UL BWP range, or when the SCS and CP of the initial UL BWP and the active UL BWP are different, the uplink sub-band is not included in the bandwidth range starting from the first RB within the initial UL BWP of the active UL BWP; or
the uplink sub-band is not included within the bandwidth range of the initial UL BWP.

Optionally, the second resource determining unit 901 is specifically configured to:
when the PUSCH is located within time-domain resources corresponding to the uplink sub-band, during the mapping from VRB to Physical Resource Block (PRB), determine the frequency domain resource location of the PUSCH through a target mode based on at least one of the starting RB location of the uplink sub-band, the starting RB location of the active UL BWP, and the starting RB location of the initial UL BWP.

Optionally, the resource determination device further includes:

a fourth determination unit, configured to determine whether the PUSCH is located in time-domain resources corresponding to the uplink sub-band based on higher-layer signaling configuration; or
a fifth determination unit, configured to determine whether the PUSCH is located in time-domain resources corresponding to the uplink sub-band through explicit indication methods.

Optionally, the fifth determination unit is specifically configured to:

when the PUSCH is a PUSCH scheduled by RAR, indicate whether the PUSCH is located within time-domain resources corresponding to the uplink sub-band through reserved bits; or
when the PUSCH is a PUSCH scheduled by DCI, indicate whether the PUSCH is located within time-domain resources corresponding to the uplink sub-band through additional information field bits; or

when the PUSCH is a PUSCH scheduled by DCI, indicate whether the PUSCH is located within time-domain resources corresponding to the uplink sub-band by reusing certain information field bits in the DCI; or

determine whether the PUSCH is located within time-domain resources corresponding to the uplink sub-band using the PRACH sequence corresponding to the PUSCH; or

determine whether the PUSCH is located within time-domain resources corresponding to the uplink sub-band using PRACH resources corresponding to the PUSCH.

Optionally, the resource determination device further includes:
a sending unit for sending a notification message to the terminal, wherein the notification message is used to enable the terminal to determine the frequency-domain resources of the uplink sub-band, including the starting RB location of the uplink sub-band and the bandwidth of the uplink sub-band.

According to the embodiment of the present disclosure, the resource determination device determines the frequency domain resource location of the PUSCH based on at least one of the starting Resource Block (RB) location of the uplink sub-band, the starting RB location of the activated uplink Bandwidth Part (active UL BWP), and the starting RB location of the initial uplink Bandwidth Part (initial UL BWP). The PUSCH may either be scheduled by a Random Access Response (RAR) or by Downlink Control Information (DCI) scrambled by a Temporary Cell-Radio Network Temporary Identifier (TC-RNTI). Using this method, the frequency domain resource location of such PUSCHs can be accurately determined, achieving the PUSCH transmission within the range of the uplink sub-band.

It should be noted that the division of units in the embodiments of the present disclosure is illustrative, and is only a logical function division, and there may be another division method in actual implementation. In addition, the functional units in various embodiments of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute all or part of the steps of the methods described in the various embodiments of the present disclosure. The aforementioned storage media include: a universal serial bus (USB) flash drive, removable hard disk, read-only memory (ROM), random access memory (RAM), magnetic disk, optical disc or other media that can store program codes.

It should be noted here that the above-mentioned device provided in this embodiment of the disclosure is capable of implementing all the method steps achieved in the embodiments of the service cell management method on the network device side described above and achieving the same technical effects. Therefore, parts of this embodiment identical to those of the method embodiments and their advantageous effects will not be redundantly described.

In some embodiments of the present disclosure, a processor-readable storage medium is further provided. The processor-readable storage medium stores program instructions configured to enable the processor to perform the following steps:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP), wherein the PUSCH may either be scheduled by a Random Access Response (RAR) or by Downlink Control Information (DCI) scrambled by a Temporary Cell-Radio Network Temporary Identifier (TC-RNTI).

When executed, the program enables the processor to achieve all implementations of the method applicable to the network-side device as shown in Fig. 5. To avoid repetition, details are omitted here.

Schemes in the embodiments of the present disclosure may be applied to various systems, especially a 5G system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as UE. A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, a Personal Digital Assistant (PDA), a Reduced Capability (Redcap) terminal, a smart appliance terminal, a vehicle-mounted terminal or a robot. In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present application may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of this application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB),a relay node (relay node), a femto (femto), a pico (pico), etc., which is not limited in the embodiments of this application. In some network structures, the network device may include a centralized unit (centralized unit, CU) node and a distributed unit (distributed unit, DU) node, and the centralized unit and the distributed unit may be geographically separated.

Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, the determination module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

**Claims**

1. A resource determination method, applied to a terminal, comprising:

   determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP);
   wherein the PUSCH is a PUSCH scheduled by Random Access Response (RAR) or a PUSCH scheduled by Downlink Control Information (DCI) scrambled by Temporary Cell Radio Network Temporary Identifier (TC-RNTI).

2. The method according to claim 1, wherein the determining the frequency domain resource location of the PUSCH according to at least one of the starting RB location of the uplink sub-band, the starting RB location of the active UL BWP, and the starting RB location of the initial UL BWP comprises:

   determining Virtual Resource Blocks (VRB) based on frequency domain resource allocation indication, wherein the frequency domain resource allocation indication is used to indicate the starting RB number of the VRB and the number of consecutive allocated RBs;
   when mapping from VRB to Physical Resource Blocks (PRB), determining the frequency domain resource location of the PUSCH through a target mode based on at least one of the starting RB location of the uplink sub-band, the starting RB location of the active UL BWP, and the starting RB location of the initial UL BWP.

3. The method according to claim 2, wherein the target mode comprises one of the following modes:

   when the starting RB number of the uplink sub-band is referenced to the carrier's starting location and the VRB number is n, the corresponding PRB number is n + starting RB number of the uplink sub-band - starting RB number of the active UL BWP, where the carrier is the carrier on which the uplink sub-band, the initial UL BWP, and the active UL BWP are located; or,
   when the starting RB number of the uplink sub-band is referenced to the starting location of the initial UL BWP and the VRB number is n, the corresponding PRB number is n + starting RB number of the uplink sub-band + starting RB number of the initial UL BWP - starting RB number of the active UL BWP; or,
   when the starting RB number of the uplink sub-band is referenced to the starting location of the active UL BWP and the VRB number is n, the corresponding PRB number is n + starting RB number of the uplink sub-band.

4. The method according to claim 2, wherein the method further comprise:

   obtaining frequency domain resource allocation indication based on the bandwidth of the uplink sub-band; or,
   obtaining frequency domain resource allocation indication based on the initial UL BWP.

5. The method according to claim 4, wherein the obtaining frequency domain resource allocation indication based on the bandwidth of the uplink sub-band comprises:

   when the PUSCH is a PUSCH scheduled by RAR and transmitted within the uplink sub-band, obtaining the frequency domain resource allocation indication according to the bandwidth of the uplink sub-band, as well as the Frequency Domain Resource Assignment (FDRA) field bits and/or other information field bits of the RAR; or, when the PUSCH is a PUSCH scheduled by DCI Format 0_0 scrambled with TC-RNTI and transmitted in the uplink sub-band, obtaining the frequency domain resource allocation indication according to the bandwidth of the uplink sub-band, and the FDRA field bits and/or other information field bits of the DCI.

6. The method according to claim 5, wherein the obtaining the frequency domain resource allocation indication according to the bandwidth of the uplink sub-band, and the FDRA field bits and/or other information field bits of the DCI, comprises:

if the bandwidth of the uplink sub-band is less than or equal to N, using the

$$\left\lceil \log_2 \left( N_{subband}^{size} \cdot \left( N_{subband}^{size} + 1 \right) \middle/ 2 \right) \right\rceil$$ lower information bits of the FDRA field of the RAR as the frequency domain resource allocation indication, where N is a preset value greater than 0 and represents the bandwidth size of the uplink sub-band; or

if the bandwidth of the uplink sub-band is greater than N, inserting

$$\left\lceil \log_2 \left( N_{subband}^{size} \cdot \left( N_{subband}^{size} + 1 \right) \middle/ 2 \right) \right\rceil - k$$ bits of 0 into the higher bits after m bits in the FDRA field of the RAR as the frequency domain resource allocation indication, where $N_{UL,hop}^{RAR}$ is used to indicate the number of frequency hopping bits in the FDRA field of the RAR and is determined by the frequency hopping identifier of the first preset information field in the RAR and the number of PRBs contained in the initial UL BWP bandwidth, and k is a preset value greater than 0; or

if the bandwidth of the uplink sub-band is greater than N, using the FDRA field bits of the RAR together with

$$\left\lceil \log_2 \left( N_{subband}^{size} \cdot \left( N_{subband}^{size} + 1 \right) \middle/ 2 \right) \right\rceil - k$$ bits from other information fields of the RAR as the frequency domain resource allocation indication.

7. The method according to claim 5, wherein the obtaining the frequency domain resource allocation indication according to the bandwidth of the uplink sub-band, and the FDRA field bits and/or other information field bits of the DCI, comprises:

if the bandwidth of the uplink sub-band is less than or equal to the initial UL BWP, using the

$$\left\lceil \log_2 \left( N_{subband}^{size} \cdot \left( N_{subband}^{size} + 1 \right) \middle/ 2 \right) \right\rceil$$ lower information bits of the FDRA field of the DCI as the frequency domain resource allocation indication; or

if the bandwidth of the uplink sub-band is greater than the initial UL BWP, inserting m bits of 0 into the higher bits after $N_{UL,hop}^{DCI}$ bits in the FDRA field of the DCI as the frequency domain resource allocation indication, wherein

$$m = \left\lceil \log_2 \left( N_{subband}^{size} \cdot \left( N_{subband}^{size} + 1 \right) \middle/ 2 \right) \right\rceil - \left\lceil \log_2 \left( N_{iniBWP}^{size} \cdot \left( N_{iniBWP}^{size} + 1 \right) \middle/ 2 \right) \right\rceil \text{, and}$$

$N_{UL,hop}^{DCI}$ indicates the number of frequency hopping bits in the FDRA field of the DCI and are determined by the frequency hopping identifier of the second preset information field in the DCI and the number of PRBs contained in the bandwidth of the initial UL BWP, $N_{subband}^{size}$ represents the bandwidth size of the uplink sub-band, and $N_{iniBWP}^{size}$ represents the bandwidth size of the initial UL BWP; or

if the bandwidth of the uplink sub-band is greater than the initial UL BWP, the FDRA field bits of the DCI together with m bits from other information fields of the DCI are used as the frequency domain resource allocation indication.

8. The method according to claim 2, wherein when mapping from VRB to Physical Resource Blocks (PRB), the determining the frequency domain resource location of the PUSCH through a target mode based on at least one of the starting RB location of the uplink sub-band, the starting RB location of the active UL BWP, and the starting RB location of the initial UL BWP, comprises:

when it is determined that the target condition is satisfied and when mapping from VRB to PRB, determining the frequency domain resource location of the PUSCH through a target mode based on at least one of the starting RB location of the uplink sub-band, the starting RB location of the active UL BWP, and the starting RB location of the initial UL BWP.

9. The method according to claim 8, wherein the target condition comprises one of the following conditions:

when the initial UL BWP and the active UL BWP are the same, or the initial UL BWP is within the bandwidth range of the active UL BWP and the subcarrier spacing (CSC) and cyclic prefix (CP) are the same, the uplink sub-band part is contained in the bandwidth range of the active UL BWP; or
when the initial UL BWP is not contained within the bandwidth range of the active UL BWP, or the CSC and CP of the initial UL BWP and the active UL BWP are different, the uplink sub-band is not contained in the initial UL BWP bandwidth range starting from the initial RB of the active UL BWP; or
the uplink sub-band is not contained within the bandwidth range of the initial UL BWP.

10. The method according to claim 2, further comprising:
when the PUSCH is located in the time-domain resources corresponding to the uplink sub-band, and when mapping from VRB to Physical Resource Blocks (PRB), determining the frequency domain resource location of the PUSCH through a target mode based on at least one of the starting RB location of the uplink sub-band, the starting RB location of the active UL BWP, and the starting RB location of the initial UL BWP.

11. The method according to claim 10, further comprising:

determining whether the PUSCH is located in the time-domain resources corresponding to the uplink sub-band based on higher-layer signaling configuration; or
determining whether the PUSCH is located in the time-domain resources corresponding to the uplink sub-band through an explicit indication mode.

12. The method according to claim 10, wherein the determining whether the PUSCH is located in the time-domain resources corresponding to the uplink sub-band through an explicit indication mode, comprises:

when the PUSCH is a PUSCH scheduled by the RAR, indicating whether the PUSCH is located in the time-domain resources corresponding to the uplink sub-band through reserved bits; or,
when the PUSCH is a PUSCH scheduled by the DCI, indicating whether the PUSCH is located in the time-domain resources corresponding to the uplink sub-band through newly added information field bits; or,
when the PUSCH is a PUSCH scheduled by the DCI, indicating whether the PUSCH is located in the time-domain resources corresponding to the uplink sub-band by reusing part of the information field bits in the DCI; or,
determining whether the PUSCH is located in the time-domain resources corresponding to the uplink sub-band through the PRACH sequence corresponding to the PUSCH; or,
determining whether the PUSCH is located in the time-domain resources corresponding to the uplink sub-band through the PRACH resource corresponding to the PUSCH.

13. The method according to claim 1, further comprising:
determining the frequency-domain resources of the uplink sub-band through a notification message sent by the network-side device, wherein the frequency-domain resources of the uplink sub-band include the starting RB location of the uplink sub-band and the bandwidth of the uplink sub-band.

14. A resource determination method, applied to a network-side device, comprising:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP);
wherein the PUSCH is a PUSCH scheduled by Random Access Response (RAR) or a PUSCH scheduled by Downlink Control Information (DCI) scrambled by a Temporary Cell Radio Network Temporary Identifier (TC-RNTI).

**15.** The method according to claim 14, wherein the determining the frequency domain resource location of the PUSCH based on the starting RB location of the uplink sub-band, the starting RB location of the active UL BWP, and the starting RB location of the initial UL BWP, comprises:

determining Virtual Resource Blocks (VRB) based on frequency-domain resource allocation indication, wherein the frequency-domain resource allocation indication is used to indicate the starting RB number of the VRB and the number of consecutive allocated RBs;
when mapping from VRB to PRB, determining the frequency domain resource location of the PUSCH through a target mode based on at least one of the starting RB location of the uplink sub-band, the starting RB location of the active UL BWP, and the starting RB location of the initial UL BWP.

**16.** The method according to claim 15, wherein the target mode comprises one of the following modes:

when the starting RB number of the uplink sub-band is referenced to the starting location of the carrier, and the VRB number is n, the corresponding PRB number is n + starting RB number of the uplink sub-band -starting RB number of the active UL BWP, where the carrier refers to the carrier on which the uplink sub-band, the initial UL BWP, and the active UL BWP reside; or,
when the starting RB number of the uplink sub-band is referenced to the starting location of the initial UL BWP, and the VRB number is n, the corresponding PRB number is n + starting RB number of the uplink sub-band + starting RB number of the UL BWP - starting RB number of the active UL BWP; or,
when the starting RB number of the uplink sub-band is referenced to the starting location of the active UL BWP, and the VRB number is n, the corresponding PRB number is n + starting RB number of the uplink sub-band.

**17.** The method according to claim 15, further comprising:

obtaining frequency-domain resource allocation indication based on the bandwidth of the uplink sub-band; or,
obtaining frequency-domain resource allocation indication based on the initial UL BWP.

**18.** The method according to claim 17, wherein the obtaining the frequency-domain resource allocation indication based on the bandwidth of the uplink sub-band comprises:

when the PUSCH is a PUSCH scheduled by the RAR and transmitted within the uplink sub-band, obtaining the frequency-domain resource allocation indication based on the bandwidth of the uplink sub-band and the FDRA field bits of the RAR and/or other information field bits; or
when the PUSCH is a PUSCH scheduled by DCI Format 0_0 scrambled with TC-RNTI and transmitted within the uplink sub-band, obtaining the frequency-domain resource allocation indication based on the bandwidth of the uplink sub-band and the FDRA field bits of the DCI and/or other information field bits.

**19.** The method according to claim 18, wherein the obtaining the frequency domain resource allocation indication according to the bandwidth of the uplink sub-band, and the FDRA field bits and/or other information field bits of the DCI, comprises:

if the bandwidth of the uplink sub-band is less than or equal to N, using the

$$\left\lceil \log_2 \left( N_{\text{subband}}^{\text{size}} \cdot \left( N_{\text{subband}}^{\text{size}} + 1 \right)/2 \right) \right\rceil$$ lower information bits of the FDRA field of the RAR as the frequency domain resource allocation indication, where N is a preset value greater than 0 and represents the bandwidth size of the uplink sub-band; or

if the bandwidth of the uplink sub-band is greater than N, inserting

$$\left\lceil \log_2 \left( N_{\text{subband}}^{\text{size}} \cdot \left( N_{\text{subband}}^{\text{size}} + 1 \right)/2 \right) \right\rceil \text{-}k$$ bits of 0 into the higher bits after m bits in the FDRA field of the RAR as the frequency domain resource allocation indication, where $N_{\text{UL,hop}}^{\text{RAR}}$ is used to indicate the number of frequency hopping bits in the FDRA field of the RAR and is determined by the frequency hopping identifier of the first preset information field in the RAR and the number of PRBs contained in the initial UL BWP bandwidth, and k is a preset value greater than 0; or
if the bandwidth of the uplink sub-band is greater than N, using the FDRA field bits of the RAR together with

$$\left\lceil \log_2\left(N_{\text{subband}}^{\text{size}} \cdot \left(N_{\text{subband}}^{\text{size}} + 1\right)/2\right)\right\rceil - k$$

bits from other information fields of the RAR as the frequency domain resource allocation indication.

20. The method according to claim 18, wherein the obtaining the frequency domain resource allocation indication according to the bandwidth of the uplink sub-band, and the FDRA field bits and/or other information field bits of the DCI, comprises:

if the bandwidth of the uplink sub-band is less than or equal to the initial UL BWP, using the

$$\left\lceil \log_2\left(N_{\text{subband}}^{\text{size}} \cdot \left(N_{\text{subband}}^{\text{size}} + 1\right)/2\right)\right\rceil$$

lower information bits of the FDRA field of the DCI as the frequency domain resource allocation indication; or,

if the bandwidth of the uplink sub-band is greater than the initial UL BWP, inserting m bits of 0 into the higher bits after $N_{\text{UL,hop}}^{\text{DCI}}$ bits in the FDRA field of the DCI as the frequency domain resource allocation indication, wherein

$$m = \left\lceil \log_2\left(N_{\text{subband}}^{\text{size}} \cdot \left(N_{\text{subband}}^{\text{size}} + 1\right)/2\right)\right\rceil - \left\lceil \log_2\left(N_{\text{iniBWP}}^{\text{size}} \cdot \left(N_{\text{iniBWP}}^{\text{size}} + 1\right)/2\right)\right\rceil$$, and $N_{\text{UL,hop}}^{\text{DCI}}$

indicates the number of frequency hopping bits in the FDRA field of the DCI and are determined by the frequency hopping identifier of the second preset information field in the DCI and the number of PRBs contained in the bandwidth of the initial UL BWP, $N_{\text{subband}}^{\text{size}}$ represents the bandwidth size of the uplink sub-band, and $N_{\text{iniBWP}}^{\text{size}}$ represents the bandwidth size of the initial UL BWP; or,

if the bandwidth of the uplink sub-band is greater than the initial UL BWP, the FDRA field bits of the DCI together with m bits from other information fields of the DCI are used as the frequency domain resource allocation indication.

21. The method according to claim 15, wherein when mapping from VRB to Physical Resource Blocks (PRB), the determining the frequency domain resource location of the PUSCH through a target mode based on at least one of the starting RB location of the uplink sub-band, the starting RB location of the active UL BWP, and the starting RB location of the initial UL BWP, comprises:

when it is determined that the target condition is satisfied, mapping from VRB to PRB, determining the frequency domain resource location of the PUSCH through a target mode based on at least one of the starting RB location of the uplink sub-band, the starting RB location of the active UL BWP, and the starting RB location of the initial UL BWP.

22. The method according to claim 21, wherein the target condition comprises one of the following:

when the initial UL BWP and the active UL BWP are the same, or the initial UL BWP is within the bandwidth range of the active UL BWP and the subcarrier spacing (CSC) and cyclic prefix (CP) are the same, the uplink sub-band part is contained in the bandwidth range of the active UL BWP; or,

when the initial UL BWP is not contained within the bandwidth range of the active UL BWP, or the CSC and CP of the initial UL BWP and the active UL BWP are different, the uplink sub-band is not contained in the initial UL BWP bandwidth range starting from the initial RB of the active UL BWP; or,

the uplink sub-band is not contained within the bandwidth range of the initial UL BWP.

23. The method according to claim 15, further comprising:

when the PUSCH is located in the time-domain resources corresponding to the uplink sub-band, and when mapping from VRB to Physical Resource Blocks (PRB), determining the frequency domain resource location of the PUSCH through a target mode based on at least one of the starting RB location of the uplink sub-band, the starting RB location of the active UL BWP, and the starting RB location of the initial UL BWP.

24. The method according to claim 23, further comprising:

determining whether the PUSCH is located in the time-domain resources corresponding to the uplink sub-band based on higher-layer signaling configuration; or,

determining whether the PUSCH is located in the time-domain resources corresponding to the uplink sub-band through an explicit indication mode.

25. The method according to claim 24, wherein the determining whether the PUSCH is located in the time-domain resources corresponding to the uplink sub-band through an explicit indication mode, comprises:

when the PUSCH is a PUSCH scheduled by the RAR, indicating whether the PUSCH is located in the time-domain resources corresponding to the uplink sub-band through reserved bits; or,
when the PUSCH is a PUSCH scheduled by the DCI, indicating whether the PUSCH is located in the time-domain resources corresponding to the uplink sub-band through newly added information field bits; or,
when the PUSCH is a PUSCH scheduled by the DCI, indicating whether the PUSCH is located in the time-domain resources corresponding to the uplink sub-band by reusing part of the information field bits in the DCI; or,
determining whether the PUSCH is located in the time-domain resources corresponding to the uplink sub-band through the PRACH sequence corresponding to the PUSCH; or,
determining whether the PUSCH is located in the time-domain resources corresponding to the uplink sub-band through the PRACH resource corresponding to the PUSCH.

26. The method according to claim 14, further comprising:
sending a notification message to the terminal, wherein the notification message is used to enable the terminal to determine the frequency-domain resources of the uplink sub-band, and the frequency-domain resources of the uplink sub-band include the starting RB location of the uplink sub-band and the bandwidth of the uplink sub-band.

27. A terminal, comprising: a memory, a transceiver, and a processor, the memory is used to store a computer program, the transceiver is used to send and receive data under the control of the processor, the processor is used to read the computer program stored in the memory and execute the following steps:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP);
wherein the PUSCH is a PUSCH scheduled by Random Access Response (RAR) or a PUSCH scheduled by Downlink Control Information (DCI) scrambled by a Temporary Cell Radio Network Temporary Identifier (TC-RNTI).

28. The terminal according to claim 27, wherein the processor is further configured to:

determine Virtual Resource Blocks (VRB) based on frequency domain resource allocation indication, wherein the frequency domain resource allocation indication is used to indicate the starting RB number of the VRB and the number of consecutive allocated RBs; and
when mapping from VRB to Physical Resource Blocks (PRB), determine the frequency domain resource location of the PUSCH through a target mode based on at least one of the starting RB location of the uplink sub-band, the starting RB location of the active UL BWP, and the starting RB location of the initial UL BWP.

29. The terminal according to claim 28, wherein the target mode comprises one of the following modes:

when the starting RB number of the uplink sub-band is referenced to the carrier's starting location and the VRB number is n, the corresponding PRB number is n + starting RB number of the uplink sub-band - starting RB number of the active UL BWP, where the carrier is the carrier on which the uplink sub-band, the initial UL BWP, and the active UL BWP are located; or,
when the starting RB number of the uplink sub-band is referenced to the starting location of the initial UL BWP and the VRB number is n, the corresponding PRB number is n + starting RB number of the uplink sub-band + starting RB number of the initial UL BWP - starting RB number of the active UL BWP; or,
when the starting RB number of the uplink sub-band is referenced to the starting location of the active UL BWP and the VRB number is n, the corresponding PRB number is n + starting RB number of the uplink sub-band.

30. The terminal according to claim 28, wherein the processor is further configured to:

obtain frequency domain resource allocation indication based on the bandwidth of the uplink sub-band; or,
obtain frequency domain resource allocation indication based on the initial UL BWP.

**31.** The terminal according to claim 30, wherein the processor is further configured to:

when the PUSCH is a PUSCH scheduled by RAR and transmitted within the uplink sub-band, obtain the frequency domain resource allocation indication according to the bandwidth of the uplink sub-band, as well as the Frequency Domain Resource Assignment (FDRA) field bits and/or other information field bits of the RAR; or, when the PUSCH is a PUSCH scheduled by DCI Format 0_0 scrambled with TC-RNTI and transmitted in the uplink sub-band, obtain the frequency domain resource allocation indication according to the bandwidth of the uplink sub-band, and the FDRA field bits and/or other information field bits of the DCI.

**32.** The terminal according to claim 31, wherein the processor is further configured to:

if the bandwidth of the uplink sub-band is less than or equal to N, use the $\left\lceil \log_2\left( N_{subband}^{size} \cdot \left( N_{subband}^{size} + 1 \right) \middle/ 2 \right) \right\rceil$ lower information bits of the FDRA field of the RAR as the frequency domain resource allocation indication, where N is a preset value greater than 0 and represents the bandwidth size of the uplink sub-band; or,

if the bandwidth of the uplink sub-band is greater than N, insert $\left\lceil \log_2\left( N_{subband}^{size} \cdot \left( N_{subband}^{size} + 1 \right) \middle/ 2 \right) \right\rceil - k$ bits of 0 into the higher bits after m bits in the FDRA field of the RAR as the frequency domain resource allocation indication, where $N_{UL,hop}^{RAR}$ is used to indicate the number of frequency hopping bits in the FDRA field of the RAR and is determined by the frequency hopping identifier of the first preset information field in the RAR and the number of PRBs contained in the initial UL BWP bandwidth, and k is a preset value greater than 0; or, if the bandwidth of the uplink sub-band is greater than N, use the FDRA field bits of the RAR together with $\left\lceil \log_2\left( N_{subband}^{size} \cdot \left( N_{subband}^{size} + 1 \right) \middle/ 2 \right) \right\rceil - k$ bits from other information fields of the RAR as the frequency domain resource allocation indication.

**33.** The terminal according to claim 31, wherein the processor is further configured to:

if the bandwidth of the uplink sub-band is less than or equal to the initial UL BWP, use the $\left\lceil \log_2\left( N_{subband}^{size} \cdot \left( N_{subband}^{size} + 1 \right) \middle/ 2 \right) \right\rceil$ lower information bits of the FDRA field of the DCI as the frequency domain resource allocation indication; or, if the bandwidth of the uplink sub-band is greater than the initial UL BWP, insert m bits of 0 into the higher bits after $N_{UL,hop}^{DCI}$ bits in the FDRA field of the DCI as the frequency domain resource allocation indication, wherein

$$m = \left\lceil \log_2\left( N_{subband}^{size} \cdot \left( N_{subband}^{size} + 1 \right) \middle/ 2 \right) \right\rceil - \left\lceil \log_2\left( N_{iniBWP}^{size} \cdot \left( N_{iniBWP}^{size} + 1 \right) \middle/ 2 \right) \right\rceil, \text{ and } N_{UL,hop}^{DCI}$$

indicates the number of frequency hopping bits in the FDRA field of the DCI and are determined by the frequency hopping identifier of the second preset information field in the DCI and the number of PRBs contained in the bandwidth of the initial UL BWP, $N_{subband}^{size}$ represents the bandwidth size of the uplink sub-band, and $N_{iniBWP}^{size}$ represents the bandwidth size of the initial UL BWP; or, if the bandwidth of the uplink sub-band is greater than the initial UL BWP, the FDRA field bits of the DCI together with m bits from other information fields of the DCI are used as the frequency domain resource allocation indication.

**34.** The terminal according to claim 28, wherein the processor is further configured to: when it is determined that the target condition is satisfied and when mapping from VRB to PRB, determine the frequency domain resource location of the PUSCH through a target mode based on at least one of the starting RB location of the uplink sub-band, the starting RB location of the active UL BWP, and the starting RB location of the initial UL BWP.

35. The terminal according to claim 34, wherein the target condition comprises one of the following:

when the initial UL BWP and the active UL BWP are the same, or the initial UL BWP is within the bandwidth range of the active UL BWP and the subcarrier spacing (CSC) and cyclic prefix (CP) are the same, the uplink sub-band part is contained in the bandwidth range of the active UL BWP; or,
when the initial UL BWP is not contained within the bandwidth range of the active UL BWP, or the CSC and CP of the initial UL BWP and the active UL BWP are different, the uplink sub-band is not contained in the initial UL BWP bandwidth range starting from the initial RB of the active UL BWP; or,
the uplink sub-band is not contained within the bandwidth range of the initial UL BWP.

36. The terminal according to claim 28, wherein the processor is further configured to:
when the PUSCH is located in the time-domain resources corresponding to the uplink sub-band, and when mapping from VRB to Physical Resource Blocks (PRB), determine the frequency domain resource location of the PUSCH through a target mode based on at least one of the starting RB location of the uplink sub-band, the starting RB location of the active UL BWP, and the starting RB location of the initial UL BWP.

37. The terminal according to claim 36, wherein the processor is further configured to:

determine whether the PUSCH is located in the time-domain resources corresponding to the uplink sub-band based on higher-layer signaling configuration; or,
determine whether the PUSCH is located in the time-domain resources corresponding to the uplink sub-band through an explicit indication mode.

38. The terminal according to claim 37, wherein the processor is further configured to:

when the PUSCH is a PUSCH scheduled by the RAR, indicate whether the PUSCH is located in the time-domain resources corresponding to the uplink sub-band through reserved bits; or,
when the PUSCH is a PUSCH scheduled by the DCI, indicate whether the PUSCH is located in the time-domain resources corresponding to the uplink sub-band through newly added information field bits; or,
when the PUSCH is a PUSCH scheduled by the DCI, indicate whether the PUSCH is located in the time-domain resources corresponding to the uplink sub-band by reusing part of the information field bits in the DCI; or,
determine whether the PUSCH is located in the time-domain resources corresponding to the uplink sub-band through the PRACH sequence corresponding to the PUSCH; or,
determine whether the PUSCH is located in the time-domain resources corresponding to the uplink sub-band through the PRACH resource corresponding to the PUSCH.

39. The terminal according to claim 27, wherein the terminal is further configured to:
determine the frequency-domain resources of the uplink sub-band through a notification message sent by the network-side device, wherein the frequency-domain resources of the uplink sub-band include the starting RB location of the uplink sub-band and the bandwidth of the uplink sub-band.

40. A resource determination device, comprising:

a first resource determination unit, configured to determine the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP);
wherein the PUSCH is a PUSCH scheduled by Random Access Response (RAR) or a PUSCH scheduled by Downlink Control Information (DCI) scrambled by a Temporary Cell Radio Network Temporary Identifier (TC-RNTI).

41. A network-side device, comprising: a memory, a transceiver, and a processor, the memory is used to store a computer program, the transceiver is used to send and receive data under the control of the processor, the processor is used to read the computer program stored in the memory and execute the following steps:

determining the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP);
wherein the PUSCH is a PUSCH scheduled by Random Access Response (RAR) or a PUSCH scheduled by Downlink Control Information (DCI) scrambled by a Temporary Cell Radio Network Temporary Identifier (TC-RNTI).

42. The network-side device according to claim 41, wherein the processor is configured to:

determine Virtual Resource Blocks (VRB) based on frequency-domain resource allocation indication, wherein the frequency-domain resource allocation indication is used to indicate the starting RB number of the VRB and the number of consecutive allocated RBs;
when mapping from VRB to PRB, determine the frequency domain resource location of the PUSCH through a target mode based on at least one of the starting RB location of the uplink sub-band, the starting RB location of the active UL BWP, and the starting RB location of the initial UL BWP.

43. The network-side device according to claim 42, wherein the target mode comprises one of the following modes:

when the starting RB number of the uplink sub-band is referenced to the starting location of the carrier, and the VRB number is n, the corresponding PRB number is n + starting RB number of the uplink sub-band -starting RB number of the active UL BWP, where the carrier refers to the carrier on which the uplink sub-band, the initial UL BWP, and the active UL BWP reside; or,
when the starting RB number of the uplink sub-band is referenced to the starting location of the initial UL BWP, and the VRB number is n, the corresponding PRB number is n + starting RB number of the uplink sub-band + starting RB number of the UL BWP - starting RB number of the active UL BWP; or,
when the starting RB number of the uplink sub-band is referenced to the starting location of the active UL BWP, and the VRB number is n, the corresponding PRB number is n + starting RB number of the uplink sub-band.

44. The network-side device according to claim 42, wherein the processor is configured to:

obtain frequency-domain resource allocation indication based on the bandwidth of the uplink sub-band; or,
obtain frequency-domain resource allocation indication based on the initial UL BWP.

45. The network-side device according to claim 44, wherein the processor is configured to:

when the PUSCH is a PUSCH scheduled by the RAR and transmitted within the uplink sub-band, obtain the frequency-domain resource allocation indication based on the bandwidth of the uplink sub-band and the FDRA field bits of the RAR and/or other information field bits; or
when the PUSCH is a PUSCH scheduled by DCI Format 0_0 scrambled with TC-RNTI and transmitted within the uplink sub-band, obtain the frequency-domain resource allocation indication based on the bandwidth of the uplink sub-band and the FDRA field bits of the DCI and/or other information field bits.

46. The network-side device according to claim 45, wherein the processor is configured to:

if the bandwidth of the uplink sub-band is less than or equal to N, use the $\left\lceil \log_2 \left( N_{\text{subband}}^{\text{size}} \cdot \left( N_{\text{subband}}^{\text{size}} + 1 \right) \middle/ 2 \right) \right\rceil$ lower information bits of the FDRA field of the RAR as the frequency domain resource allocation indication, where N is a preset value greater than 0 and represents the bandwidth size of the uplink sub-band; or

if the bandwidth of the uplink sub-band is greater than N, insert $\left\lceil \log_2 \left( N_{\text{subband}}^{\text{size}} \cdot \left( N_{\text{subband}}^{\text{size}} + 1 \right) \middle/ 2 \right) \right\rceil - k$ bits of 0 into the higher bits after m bits in the FDRA field of the RAR as the frequency domain resource allocation indication, where $N_{\text{UL,hop}}^{\text{RAR}}$ is used to indicate the number of frequency hopping bits in the FDRA field of the RAR and is determined by the frequency hopping identifier of the first preset information field in the RAR and the number of PRBs contained in the initial UL BWP bandwidth, and k is a preset value greater than 0; or
if the bandwidth of the uplink sub-band is greater than N, use the FDRA field bits of the RAR together with

$$\left\lceil \log_2\left(N_{subband}^{size} \cdot \left(N_{subband}^{size}+1\right)/2\right)\right\rceil - k$$ bits from other information fields of the RAR as the frequency domain resource allocation indication.

47. The network-side device according to claim 45, wherein the processor is configured to:

if the bandwidth of the uplink sub-band is less than or equal to the initial UL BWP, use the $$\left\lceil \log_2\left(N_{subband}^{size} \cdot \left(N_{subband}^{size}+1\right)/2\right)\right\rceil$$ lower information bits of the FDRA field of the DCI as the frequency domain resource allocation indication; or,

if the bandwidth of the uplink sub-band is greater than the initial UL BWP, insert m bits of 0 into the higher bits after $N_{UL,hop}^{DCI}$ bits in the FDRA field of the DCI as the frequency domain resource allocation indication, wherein

$$m = \left\lceil \log_2\left(N_{subband}^{size} \cdot \left(N_{subband}^{size}+1\right)/2\right)\right\rceil - \left\lceil \log_2\left(N_{iniBWP}^{size} \cdot \left(N_{iniBWP}^{size}+1\right)/2\right)\right\rceil$$, and $N_{UL,hop}^{DCI}$ indicates the number of frequency hopping bits in the FDRA field of the DCI and are determined by the frequency hopping identifier of the second preset information field in the DCI and the number of PRBs contained in the bandwidth of the initial UL BWP, $N_{subband}^{size}$ represents the bandwidth size of the uplink sub-band, and $N_{iniBWP}^{size}$ represents the bandwidth size of the initial UL BWP; or,

if the bandwidth of the uplink sub-band is greater than the initial UL BWP, the FDRA field bits of the DCI together with m bits from other information fields of the DCI are used as the frequency domain resource allocation indication.

48. The network-side device according to claim 44, wherein the processor is configured to:
when it is determined that the target condition is satisfied, and when mapping from VRB to PRB, determine the frequency domain resource location of the PUSCH through a target mode based on at least one of the starting RB location of the uplink sub-band, the starting RB location of the active UL BWP, and the starting RB location of the initial UL BWP.

49. The network-side device according to claim 48, wherein the target condition comprises one of the following:

when the initial UL BWP and the active UL BWP are the same, or the initial UL BWP is within the bandwidth range of the active UL BWP and the subcarrier spacing (CSC) and cyclic prefix (CP) are the same, the uplink sub-band part is contained in the bandwidth range of the active UL BWP; or,
when the initial UL BWP is not contained within the bandwidth range of the active UL BWP, or the CSC and CP of the initial UL BWP and the active UL BWP are different, the uplink sub-band is not contained in the initial UL BWP bandwidth range starting from the initial RB of the active UL BWP; or,
the uplink sub-band is not contained within the bandwidth range of the initial UL BWP.

50. The network-side device according to claim 44, wherein the processor is configured to:
when the PUSCH is located in the time-domain resources corresponding to the uplink sub-band, and when mapping from VRB to Physical Resource Blocks (PRB), determine the frequency domain resource location of the PUSCH through a target mode based on at least one of the starting RB location of the uplink sub-band, the starting RB location of the active UL BWP, and the starting RB location of the initial UL BWP.

51. The network-side device according to claim 50, wherein the processor is configured to:

determine whether the PUSCH is located in the time-domain resources corresponding to the uplink sub-band based on higher-layer signaling configuration; or,
determine whether the PUSCH is located in the time-domain resources corresponding to the uplink sub-band through an explicit indication mode.

52. The network-side device according to claim 51, wherein the processor is configured to:

when the PUSCH is a PUSCH scheduled by the RAR, indicate whether the PUSCH is located in the time-domain resources corresponding to the uplink sub-band through reserved bits; or,

when the PUSCH is a PUSCH scheduled by the DCI, indicate whether the PUSCH is located in the time-domain resources corresponding to the uplink sub-band through newly added information field bits; or,

when the PUSCH is a PUSCH scheduled by the DCI, indicate whether the PUSCH is located in the time-domain resources corresponding to the uplink sub-band by reusing part of the information field bits in the DCI; or,

determine whether the PUSCH is located in the time-domain resources corresponding to the uplink sub-band through the PRACH sequence corresponding to the PUSCH; or,

determine whether the PUSCH is located in the time-domain resources corresponding to the uplink sub-band through the PRACH resource corresponding to the PUSCH.

53. The network-side device according to claim 41, wherein the network-side device is configured to:
send a notification message to the terminal, wherein the notification message is used to enable the terminal to determine the frequency-domain resources of the uplink sub-band, and the frequency-domain resources of the uplink sub-band include the starting RB location of the uplink sub-band and the bandwidth of the uplink sub-band.

54. A resource determination device, comprising:

a second resource determination unit, configured to determine the frequency domain resource location of a Physical Uplink Shared Channel (PUSCH) based on at least one of the starting Resource Block (RB) location of the uplink sub-band, the starting RB location of the activated uplink Bandwidth Part (active UL BWP), and the starting RB location of the initial uplink Bandwidth Part (initial UL BWP);
wherein the PUSCH is a PUSCH scheduled by Random Access Response (RAR) or a PUSCH scheduled by Downlink Control Information (DCI) scrambled by a Temporary Cell Radio Network Temporary Identifier (TC-RNTI).

55. A processor readable storage medium, comprising computer readable programs stored therein, for enabling a processor to execute the steps of the resource determination method according to any one of claims 1 to 13, or for enabling the processor to execute the steps of the resource determination method according to any one of claims 14 to 26.

FIG. 1

FIG. 2

FIG. 3

Determining the frequency domain resource location of a PUSCH based on at least one of the starting RB location of the uplink sub-band, the starting RB location of the activated uplink Bandwidth Part (active UL BWP), and the starting RB location of the initial uplink Bandwidth Part (initial UL BWP), wherein the PUSCH is a PUSCH scheduled by RAR or a PUSCH scheduled by DCI scrambled by a TC-RNTI

401

FIG. 4

Determining the frequency domain resource location of the PUSCH based on at least one of the starting RB location of the uplink sub-band, the starting RB location of the active UL BWP, and the starting RB location of the initial UL BWP, where the PUSCH is either scheduled by RAR or by TC-RNTI scrambled DCI.

501

FIG. 5

FIG. 6

first resource
determination unit

701

FIG. 7

800

processor

820

memory

Bus interface

810

transceiver

FIG. 8

second resource
determination unit

901

FIG. 9

**INTERNATIONAL SEARCH REPORT**

| International application No. |
|---|
| **PCT/CN2023/110195** |

**A.  CLASSIFICATION OF SUBJECT MATTER**

H04L 5/00(2006.01)i

According to International Patent Classification (IPC) or to both national classification and IPC

**B.  FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, WOTXT, USTXT, EPTXT, CNKI, IEEE, 3GPP: 子带, 起始, 初始, 第一, 资源块, 位置, 频域资源, PUSCH, RAR, DCI, TC-RNTI, RB, subband, active UL BWP, active BWP, initial UL BWP, initial BWP, start, initial, first, position, frequency domain resources

**C.  DOCUMENTS CONSIDERED TO BE RELEVANT**

| Category* | Citation of document, with indication, where appropriate, of the relevant passages | Relevant to claim No. |
|---|---|---|
| X | CN 113677013 A (VIVO MOBILE COMMUNICATION TECHNOLOGY CO., LTD.) 19 November 2021 (2021-11-19)<br>description, paragraphs [0004]-[0015], [0029], and [0061]-[0087] | 1, 14, 27, 40, 41, 54, 55 |
| A | CN 111565461 A (SHARP CORPORATION et al.) 21 August 2020 (2020-08-21)<br>entire document | 1-55 |
| A | WO 2021242931 A1 (QUALCOMM INC.) 02 December 2021 (2021-12-02)<br>entire document | 1-55 |
| A | WO 2021225656 A1 (QUALCOMM INC.) 11 November 2021 (2021-11-11)<br>entire document | 1-55 |
| A | CN 112399589 A (HUAWEI TECHNOLOGIES CO., LTD.) 23 February 2021 (2021-02-23)<br>entire document | 1-55 |
| A | FUJITSU. "Remaining issues on UL signals and channels for NR-U"<br>*3GPP TSG RAN WG1 #101, R1-2004041*, 16 May 2020 (2020-05-16),<br>entire document | 1-55 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 October 2023** | **30 October 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/110195**

| Patent document cited in search report | | | Publication date (day/month/year) | Patent family member(s) | | | Publication date (day/month/year) |
|---|---|---|---|---|---|---|---|
| CN | 113677013 | A | 19 November 2021 | None | | | |
| CN | 111565461 | A | 21 August 2020 | WO | 2020164452 | A1 | 20 August 2020 |
| WO | 2021242931 | A1 | 02 December 2021 | US | 2021377938 | A1 | 02 December 2021 |
| | | | | EP | 4158834 | A1 | 05 April 2023 |
| | | | | TW | 202147902 | A | 16 December 2021 |
| WO | 2021225656 | A1 | 11 November 2021 | BR | 112022021618 | A2 | 28 February 2023 |
| | | | | EP | 4147402 | A1 | 15 March 2023 |
| | | | | US | 2023135832 | A1 | 04 May 2023 |
| | | | | KR | 20230004551 | A | 06 January 2023 |
| | | | | TW | 202147879 | A | 16 December 2021 |
| CN | 112399589 | A | 23 February 2021 | WO | 2021032027 | A1 | 25 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210922186